# EUROPEAN PATENT SPECIFICATION

(11) **EP 1 450 096 B1**
(45) Date of publication and mention of the grant of the patent: **22.08.2007**
(21) Application number: 03380283.6
(22) Date of filing: 04.12.2003
(51) Int. Cl.: F16M 11/28

(54) **Multipurpose trestle**
Mehrzweckbock
Tréteau à usage multiple

(30) Priority: 04.12.2002 ES 200202784; 25.11.2003 ES 200302762
(43) Date of publication of application: 25.08.2004
(73) Proprietor: Bello Garcia, Benjamin, 33204 Gijon (Asturias) (ES)
(72) Inventor: Bello Garcia, Benjamin, 33204 Gijon (Asturias) (ES)
(74) Representative: Carpintero Lopez, Francisco

(56) References cited:
- WO-A-98/56538
- DE-U- 20 208 954
- US-A- 5 160 125
- US-B1- 6 273 662

## Description

### OBJECT OF THE INVENTION

The present invention relates to a trestle, of the type of those which are materialized in a column finished underneath in a tripod and on top in a bolster which through said bolster completes its function as a support element, conveniently separated from the floor.

The trestle constitutes a strong, easily transported tool, which has multiple applications such as holding up signs, pipes, beams, prefabricated roofs, furniture, etc., it being capable also of acting as a floor to roof or wall to wall pressing agent, etc.

The object of the invention is to achieve a trestle of adjustable height equipped with levelling means and easily adapted or fitted to any practical requirement resulting from the different utilities foreseen for the same.

A further object of the invention is a series of improvements which affect the stance on the floor, the means which intervene in the column supporting the bolster, and the bolster itself.

### BACKGROUND OF THE INVENTION

The trestles existing at the present time are materialized in a lower tripod from which emerges a telescopic column finished in a small supporting surface, whereby these trestles have a significant limitation in their application, since they are conceived fundamentally as props.

The trestles conceived as supporting elements are double, that is, the mentioned structure is repeated and their two halves are connected by means of crosspieces, which complicates their structure considerably and also makes the handling thereof very difficult because of the volume they occupy, for which reason habitually, in these cases two independent trestles are used, connected to each other by means of a removable upper crosspiece which constitutes the means of support for the objects to be sustained. This solution substantially simplifies the problems of manipulation, but however, it continues to signify a considerable structural complexity for the double trestle, and an occupation of space which in many cases is unacceptable.

Moreover, any of the previously mentioned trestles has levelling problems in the load plane.

DE-20208954 corresponding to the preamble of claim 1 discloses a support unit for construction of workpiece transfer tracks comprising a welded structure which is provided with four feet with means for individual fine height adjustment.

### DESCRIPTION OF THE INVENTION

The trestle which the invention discloses resolves the problems outlined above in a fully satisfactory manner.

To this end and in a more specific way the trestle which is disclosed, provided with a telescopic column finished underneath in a supporting tripod, for example, on the floor, has its free upper extremity finished in a transversal fishplate, which is fastened to the tube forming part of said telescopic column through its middle point, and has on its ends some regulators consisting of parallel and vertical screws, fitted with respective operating levers, finished on top in supporting bases, whereby two substantially separated points of support are defined in the trestle, for adjustable positioning in height to assure perfect levelling. In this sense and in accordance with a variant of embodiment of the invention, the aforesaid fishplate can be finished in turn in other two parallel transversal fishplates, which receive on their ends individual regulator screws finished in corresponding supporting bases, in which case the trestle offers four adjustable points of support, located according to the imaginary vertices of a quadrilateral.

The telescopic column is constituted, in conventional terms, by means of two or more cylindrical and coaxial tubes. In the case of two tubes, one is firmly joined to the fishplate which forms part of the upper bolster and the other is fixed to the lower tripod, as well as being fastened to each other by means of two knobs which terminate respective setscrews, whereby this twofold fastening, besides assuring immobilization between the two tubes which are part of the telescopic column, allows said tubes to be fastened adequately when it is necessary to increase the effective height of the trestle in greater measure, by means of using an extension tube, with an intermediate sleeve, provided in turn with other two setscrews with their respective knobs.

The mounting has also been foreseen, immediately above the tripod, that is, where the actual column begins, of a disc-shaped butt, coaxial with the column itself, from which emerges a laterally removable pin, said butt being intended to receive optionally a plurality of counterweights also disc-shaped, which come with a radial incision for their lateral coupling on the column, and with a hole operatively facing the aforesaid pin, for definitive retention of such counterweights, the clear purpose of which is to displace substantially downward the centre of gravity of the trestle, with its load, to augment its stability in those cases in which the bolster is located high up.

In accordance with another of the characteristics of the invention it has been foreseen that the actual trestle is assisted by a series of adapters which modify its structure for different practical applications, specifically a batten of wood or another material, able to be coupled to the pair of regulator screws which form the bolster acting as an isolator and preventing the object to be positioned, of flat base, from resting directly on said regulator screws and from possibly being damaged by the same, especially when delicate objects are involved. There is another adapter which can likewise be coupled to the previous one and with its upper base dihedral, that is, a base of angular seat for the stabilizing of objects of circular section. The adaptation to the bolster has also been foreseen of a roller, with means for braking or locking, which proves especially suitable when the object to be positioned has to be displaced laterally once the desired height has been reached.

All these adapters can be housed exclusively in their base for the regulator screws, or they can also incorporate grooved extensions for fitting on the upper rim of the fishplate of the bolster.

It has also been foreseen that the free extremity of the arms which form part of the tripod fit in the base of wood or another material, with a coating underneath of rubber or another soft material to avoid the deterioration of delicate surfaces on which the trestle may have to stand. Likewise, it has also been foreseen that one of the arms of the tripod be fitted with means for regulation in height to allow perfect verticality of the column when differences in level exist in the supporting surface.

Another characteristic of the invention consists in the incorporation of a removable stand, which is mounted on the fishplate of the bolster, standing as well as on this fishplate, on the supporting bases corresponding to the regulators which said fishplate has fitted on its ends.

Said stand is constituted by a small box which in combination with a screw regulator knob, an interior gusset, some butts and a recovery spring can slide in a longitudinal direction with respect to the fishplate of the bolster, providing a third regulation, in addition to the vertical and transversal regulation, since it can also be regulated lengthwise with respect to the fishplate of the bolster. That stand also has a latch for locking in position, of an accessory which is mounted on the stand.

The trestle can be completed with a series of accessories constituted, for example, by a planar piece with regulators which allow adaptation to and support for planar or irregular objects.

Likewise the accessory can be materialized in a rigid and extendable board to offer a greater supporting surface with respect to the lines which form the bases supporting the bolsters, being even constituted by a body with a roller for supporting all types of object, the accessory even being formed by a V-shaped body with a base in which some rollers are held which facilitate the positioning of any piece, be it oval, cylindrical, hexagonal, etc.

In any case, the accessory, of whatever type, includes a guide underneath for its assembly on the corresponding stand, as well as a means of snap-fitting and locking on such stand, the locking being constituted by a notch established for this purpose in the aforesaid guide of the accessory in which the latch which the stand has, is positioned.

In addition, the V-shaped accessory has some notches on the sides of the base piece, which allow the assembly of bars for stabilizing or for joining trestles, which are held by means of some fixing sleeves.

Another characteristic of the trestle relates to the fishplate established on the upper part of the telescopic column of the trestle being able to incorporate extendable arms on its ends, each one of which includes another bolster, which gives rise to a double bolster. The double bolster can be fitted with four double action or extension regulators, which facilitates adapting the trestle to different pieces, for example pieces with a very irregular base, since the regulators can be regulated both individually and in pairs.

Furthermore it is possible that the extendable arms of the bolster constituted by an external tube and a telescopically moveable internal tube be capable of rotation, inclining both to the right and the left, and forward and backward, with respect to the fishplate of the bolster.

These rotations are achieved by means of some rotary mechanisms defined between the ends of the fishplate and the external tubes of the extendable arms.

Each rotary mechanism incorporates a first semi-circumferential plate joined to the external tube, which is hinged together with the latter with respect to a batten by means of a screw, which batten in turn is joined perpendicularly to a second semi-circumferential plate which is hinged with respect to the fishplate by means of a screw. Each one of the semi-circumferential plates is provided with an arched groove in which sits a screw with a knob for manual operation which allows the position of the first semi-circumferential plate to be locked with respect to the batten regulating the forward or backward inclination of the external tube with respect to the batten, or in the case of the second semi-circumferential plate, it allows its position to be locked with respect to the fishplate by regulating the inclination to the right or left of the batten and jointly of the first semi-circumferential plate and of the external tube.

This described system allows one to choose the appropriate angle of the external tubes, both to the left and right, and forward and backward. In order to assure the vertical position of the external tube the mechanism is completed with some blocking levers which emerge from the fishplate and from the batten, which are fitted with springs which push the levers and fix them in some grooves which each semi-circumferential plate has on its curved part locking the vertical position of the tube. To unlock this position of the external tube, it is necessary to apply a slight pressure on the lever, thereby allowing the external tube to rotate through the appropriate angle.

Another characteristic of the invention is the possibility of incorporating an adaptable hoist for lifting small loads which includes a simple snap-fit system which engages on the bolster of the trestle. More specifically, for mounting the adaptable hoist, it has been foreseen that the fishplate of the bolster has in the vicinity of its ends, individual holes to house some tubes which are held fast by means of some fastening sleeves, and on which tubes the hoist itself is mounted by means of some fastening angle bars, being fixed by means of a blocking lever, to which is connected a spring, so that, once the angle bars mentioned have been inserted, it assists in retaining said lever in the engagement system of the hoist.

Insofar as the hoist itself is concerned, the same has an extendable upper horizontal arm formed by an external tube and another of substantial length housed inside the former, this long tube bearing a motor on one end and some pulleys on the same end and on the opposite end, whereby through a cable from the motor and passing through the pulleys provided on the ends it is possible to proceed to the hooking of a load and its corresponding elevation. The external tube includes some bearings for displacement toward one side and the other of the interior tube and thereby facilitates the positioning of the load with respect to the bolster of the trestle. The hoist is completed with a telescopic vertical arm and an extendable lower horizontal arm joined to a stand which is secured by means of the fastening angle bars, to the tubes which pass through the fishplates of the bolsters.

The vertical arm of the hoist has on the inside of the internal tube an extension spring, connected to some pieces, the lower one joined to the base of the internal tube and the upper one which runs through the internal tube and abuts on a hoop which is mounted on a rod which is secured to the base of the external tube, whereby it results in the spring pulling the interior tube upwards, to facilitate the task of extending the arm.

Another characteristic of the invention, relates to a form of regulating the extending of the vertical column of the trestle, being based on the incorporation of an intermediate sleeve in combination with some upper and lower hoops which the column can incorporate. The sleeve is fitted over the length lying between said hoops, sliding being possible by virtue of said sleeve having a groove to allow the obstacle to be overcome which is constituted by the knobs which secure the telescopic tubes of the column. At an interior and intermediate point of the sleeve, an interior hoop has been foreseen which abuts on the upper hoop of the column thereby extending the height of the column. Between the interior hoop and the upper end of the sleeve there is a tubular portion having the same diameter as the upper extendable length of the column for the coupling thereof.

The aforesaid sleeve is further completed with a pair of radial screws finished in knobs for manual operation, the upper one for securing the upper extendable length of the column and the lower one for securing the sleeve to the other length of the column.

In connection with the legs which constitute the tripod, another of the characteristics of the invention consists in that the incorporation has been foreseen of some regulators in height on the end parts of said legs to achieve optimum support of the tripod and adapt to any irregularity or inclination of the ground. To these regulators some wheels are attached laterally which are slightly raised from the floor in the normal position of use, but which on inclining the trestle, this latter comes to rest on some of the wheels and it is possible to proceed to the transfer thereof as if it were a trolley.

Likewise, wheeling mechanisms have been foreseen, in the vicinity of the ends of the arms which constitute the supporting legs, which constitute the support of the trestle, allowing the upright transfer of the trestle from one place to another, whilst when the trestle is loaded, those wheeling mechanisms are raised, the trestle being supported by means of the base of the regulators. The wheeling mechanisms can consist of supporting wheels or balls and are connected to a locking mechanism which permits them to be kept in the down position even when the trestle receives a weight, thus avoiding standing on the regulators and therefore allowing the wheeled transfer of the trestle, both with and without a load.

Thus, based on those improvements applied to the legs constituting the tripod, the trestle can be displaced over long distances by inclination of the same, pushing it or pulling it as if it were a trolley, whilst in the upright position and with no load, the same can be transferred from one place to another by resting on the wheeling mechanisms foreseen in the vicinity of the ends of the legs. The trestle can be locked when a weight is applied thereon, so that the locking mechanism is retracted and the trestle rests directly on the lower part of the regulators.

Another characteristic of the invention consists in the incorporation in the trestle of a levelling device with rotary point which serves to plumb the column in all directions, which level is mounted on a fixed base on a lower section of the vertical column of the trestle, or above the disc-shaped butt, it being able to rotate to find the most appropriate position, or to move in the vertical sense, both upward and downward.

Foreseen, also as an improvement, is a supplementary and adjustable support mounted underneath the trestle, formed by a lower disc-shaped piece which is screwed on that lower end of the column to provide the trestle with greater stability and stiffness.

Another characteristic of the invention consists in the incorporation, on the vertical column of the trestle, of some fastening or recall sleeves, the function of which is that of memorizing a measurement which it is of interest to keep when the column of the trestle has to be extended, as well as to serve as additional securing at the conventional measurements of the tubes which constitute the column, and even to make possible the fastening of some stabiliser bars.

Each of these sleeves has a securing knob and a lower edge fitted on its base with a rubber pad or isolator to damp impacts, as well as having some angle bars where the stabiliser bars are lodged.

Another characteristic of the invention consists in the incorporation of a safety device for automatic locking, based on a fishplate through which runs one of the setscrews fitted in the telescopic column to which it is fastened by means of some nuts mounted on the screw itself. The fishplate produces the locking of this screw with the collaboration of a spring mounted between the same and the lateral surface of the tube which forms part of the column of the trestle.

Another characteristic of the invention consists of the possibility of incorporating a lower supporting platform, based on which work is simplified when a common and transportable surface is required for one or more trestles, particularly when working with hydraulic or pneumatic lifting systems, which requires an equipment or assembly, which platform can be moved by manual means or by an independent motor.

In any case, said platform comes with a lower base fitted with wheels and regulating stabilizers which stabilize and lock the platform once the desired position has been achieved, which stabilizers are of double action or extension and can come in two different forms, independent and be adjustable independently and adjustable simultaneously or jointly. In this last case it has been foreseen that each regulator has on its upper part a pinion whereby a chain passing over all the pinions and by means of the corresponding drive carries out the simultaneous regulation of all the stabilizers, being of special application on flat or nearly smooth floors, whilst when the floor is irregular then the regulation would be carried out in an independent and manual way for each of the stabilizers.

This platform is supplemented with a transport handle to steer the same, the aforesaid platform having wheels or other means which allow its easy displacement from one site to another.

That lower base of the platform is supplemented with a second base joined to the previous one by means of some hinges or axles in correspondence with one of the ends, while on the other end it includes some regulators fitted with pinions and common chain which abut against the lower base and which when driven elevate that part of the adjustable base, the longitudinal inclination being regulated in this way.

It is also supplemented with a third base joined longitudinally to that previously mentioned, and also by means of hinges or axles on one side and with regulators on the opposite one, with the same functionality as that described previously which regulates the lateral inclination.

With this twofold regulation levelling is achieved, in both the longitudinal and lateral. directions, of the base of the platform to achieve a horizontal surface on which the trestles can stand. On this surface one or more plumb lines can be mounted which serve as guide when levelling said surface.

The trestle so constituted can have a motor with screw to perform the elevation of the telescopic column, or to extend said column by means of a pneumatic or hydraulic system, it being possible to actuate said devices or means by remote control or via direct connection.

### DESCRIPTION OF THE DRAWINGS

To complete the description which is being made and with the object of assisting in a better understanding of the characteristics of the invention, in accordance with a preferred example of practical embodiment thereof, the description is accompanied, as an integral part thereof, with a set of drawings wherein by way of illustration and not restrictively, the following has been represented:
Figure 1. - This shows a schematic representation in perspective of a multipurpose trestle implemented in accordance with the present invention.
Figure 2. - This shows a partial detail in perspective of the trestle of the previous figure, in a variant of embodiment in which its bolster is double.
Figure 3. - This shows a detail in perspective of an adapter provided as complement of the bolster of the trestle.
Figures 4 and 5. - They show perspectives of other two adapters, likewise provided as complements to the bolster of the trestle.
Figure 6. - This shows a partial detail, in perspective, of the tube constituting the bolster and of an extension tube, both joined by a sleeve which has an interior butt.
Figure 7. - This shows a detail in perspective of the trestle at the level of the tripod in which the disc-shaped base is observed bearing a counterweight.
Figure 8. - This shows a view according to a general perspective of a trestle which includes a series of complementary elements.
Figure 9. - This shows a detail of a device for displacement and immobilization of the trestle on the floor.
Figure 10. - This shows a detail in perspective of the device which constitutes the counterweight located in the lower part of the column of the trestle.
Figure 11. - This shows a view in perspective of the fastening or recall sleeve by means of which it is possible to memorize a measurement of the extension of the column of the trestle, also serving as third securing and fastening means of the stabiliser bars.
Figure 12. - This shows the safety device for automatic locking of the telescopic column of the trestle.
Figure 13. - This shows a view in perspective of the stand base applicable on the bolster of the trestle.
Figure 14. - This shows one of the multiple accessories which can be mounted on the stand represented in the previous figure.
Figure 15. - This shows another view in perspective of another accessory for supporting tubes or bodies with a circular, oval or polygonal outline, in the position prior to their being mounted on the stand, which is likewise in the position prior to its being mounted on the upper fishplate of the bolster of the trestle.
Figure 16. -. This shows a view in perspective of a bolster with four double action or extension regulators fitted with extendable arms for each pair of regulators.
Figure 17. - This shows the mechanism for rotating the extendable arm with respect to the fishplate of the bolster.

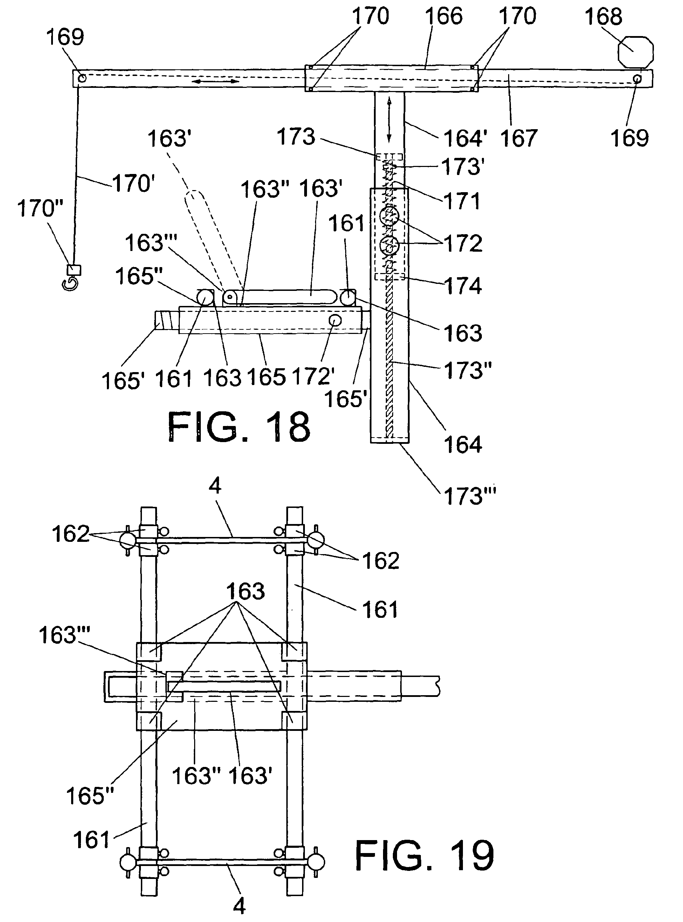

Figures 18 and 19. - They show elevation and plan views corresponding to the hoist and to the means of mounting the hoist on the fishplate of the bolster of the trestle.
Figure 20. - This shows a view in exploded form of the sleeve for extension of the telescopic column of the trestle.
Figure 21. - This shows a general view in perspective of the lower support platform with which the trestle can be complemented.
Figure 22. - This shows a detail of the double action or extension regulators.

### PREFERRED EMBODIMENT OF THE INVENTION

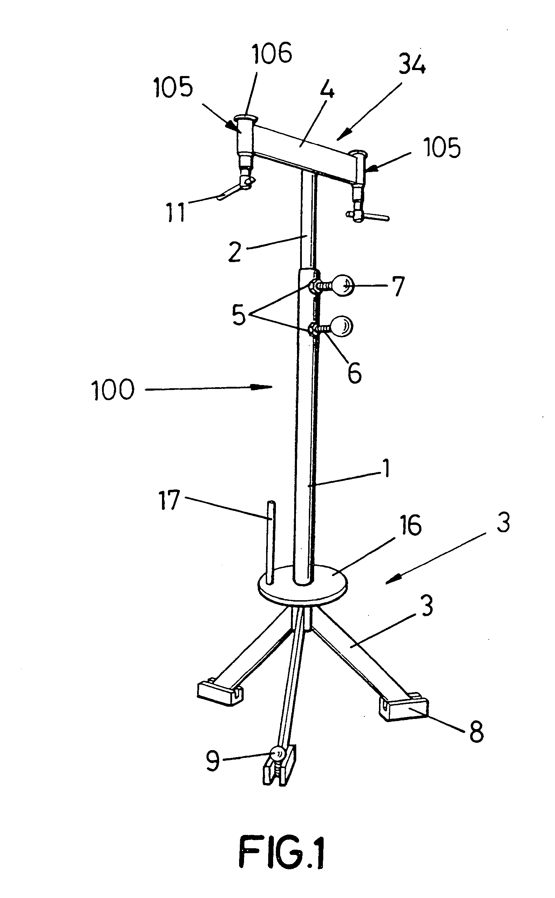

In the light of the figures cited above and more specifically of figure 1, it can be observed how the multipurpose trestle which the invention discloses is of the type which comprises a telescopic column (100) in which at least a lower tube (1) and an upper tube (2) form part, which is finished underneath in a tripod (3) provided with legs (3').

Starting from this basic construction the multipurpose trestle stands out fundamentally because the telescopic column (100) is finished on top in a transversal fishplate (4) which forms part of a supporting bolster (34-35-36) and which is fitted with means for sustaining consisting of some regulators (105), each one of which comprises a sleeve (197) and a vertical screw (196) inside that sleeve (197), operated by a lever (11) which ends on top in a supporting base (106). Also the column (100) incorporates at a lower level, immediately above the tripod (3), a disc-shaped butt (16) provided with a removable securing pin (17), in a vertical arrangement, eccentric and parallel to the column, said disc-shaped butt (16) being intended to receive one or more counterweights (18) to augment the stability of the trestle, especially when the bolster (34-35-36) is very high, which counterweights (18) come with a radial incision (19) for their lateral coupling to the column (100) and with a hole (20) for the engagement of the securing pin (17) which immobilizes the counterweight (18).

The telescopic column (100) can only have a lower tube (1) and an upper tube (2), the lower tube (1) having in the vicinity of its upper extremity a pair of nuts (5) through which pass some setscrews (6) which penetrate into the upper tube (2), for fastening the lower tube (1) to the upper tube (2), and which are provided with respective knobs (7) which facilitate the manual operation thereof.

The bolster (34) of the trestle, shown in figure 1, can be constituted by a transversal fishplate (4) firmly joined to the upper extremity of the column (100), and finished at their ends in individual regulators (105) located in a symmetrical arrangement with respect to the tube (2) which have supporting bases (106) which constitute the sustaining area of the trestle.

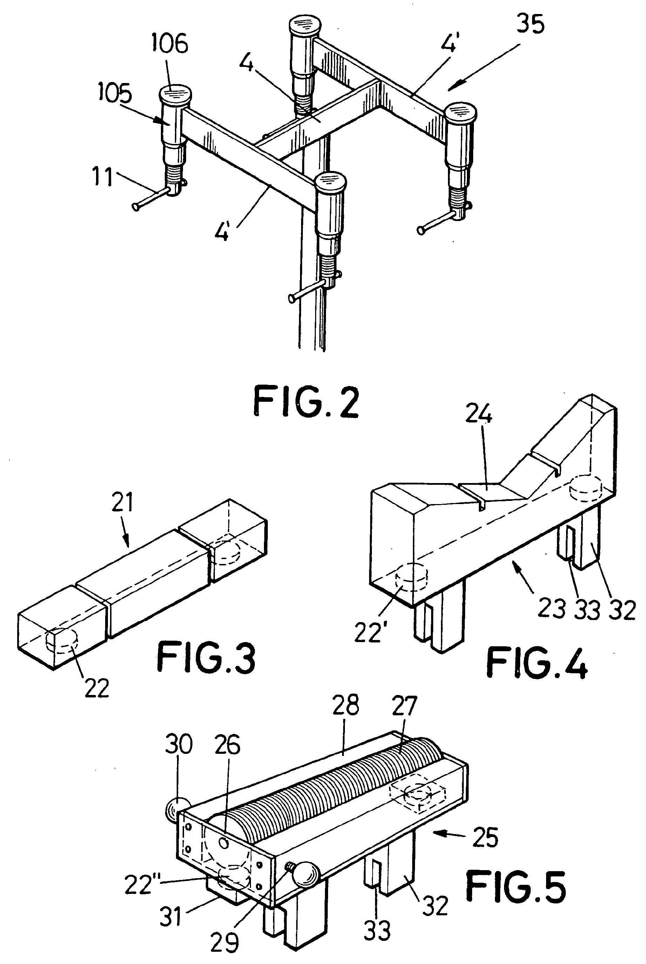

The possibility shown in figure 2 nevertheless exists in which the bolster (35) is constituted by a fishplate (4) which is finished at its ends in individual transversal fishplates (4'), finished in turn by four regulators (105), fitted with four supporting bases (106) in symmetrical and separated positions with respect to the column (100) constituting the sustaining area of the trestle.

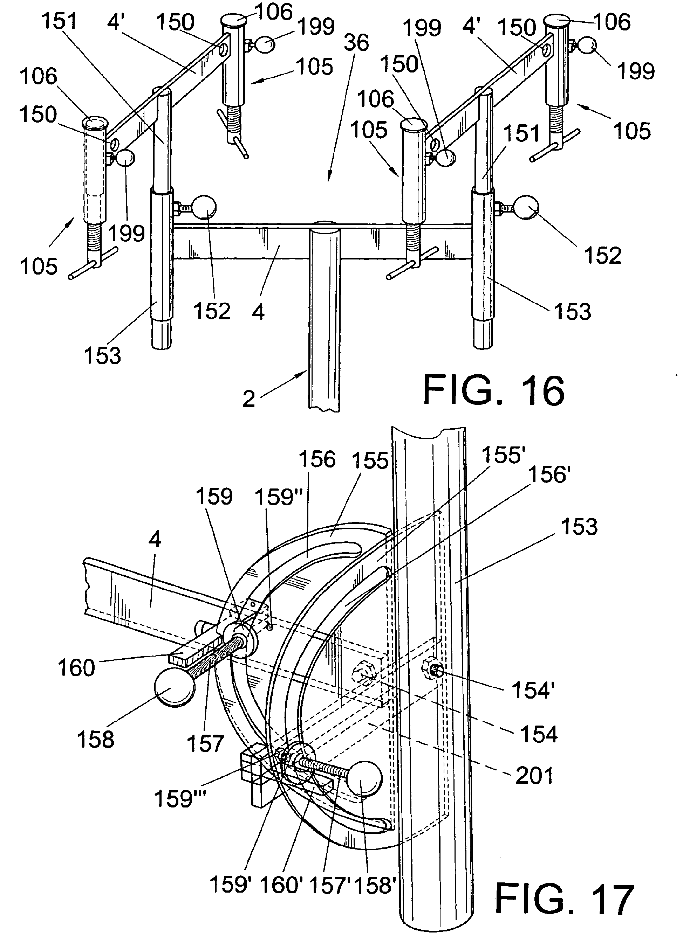

In another possible embodiment represented in figure 16, the bolster (36) can be formed by a fishplate (4) which has on its ends some extendable arms, which comprise an external tube (153) and an internal tube (151), moveable inside the external tube (153), to which it is fastened by means of some securing knobs (152), corresponding fishplates (4') being mounted on the internal tubes (151), regulators (105) being fitted on the ends thereof.

The bolster (34-35-36) can act directly as a supportive element through the supporting bases (106), or they can do so with the interposition of different adapters, like those shown in figures 3 to 5 and 13 to 15.

In figure 3 an adapter (21) is shown which is materialized in a prismatic-rectangular batten of wood or another material which offers a continuous planar support, provided on its lower face with some cylindrical seats (22) for coupling the supporting bases (106) of the regulators (105).

Another type of adapter (23), represented in figure 4, consists of a piece whose face or upper rim (24) configures an obtuse dihedron suitable for constituting the support for cylindrical objects which may tend to roll sideways, and it has on its lower base cylindrical seats (22') for coupling the supporting bases (106) of the regulators (105).

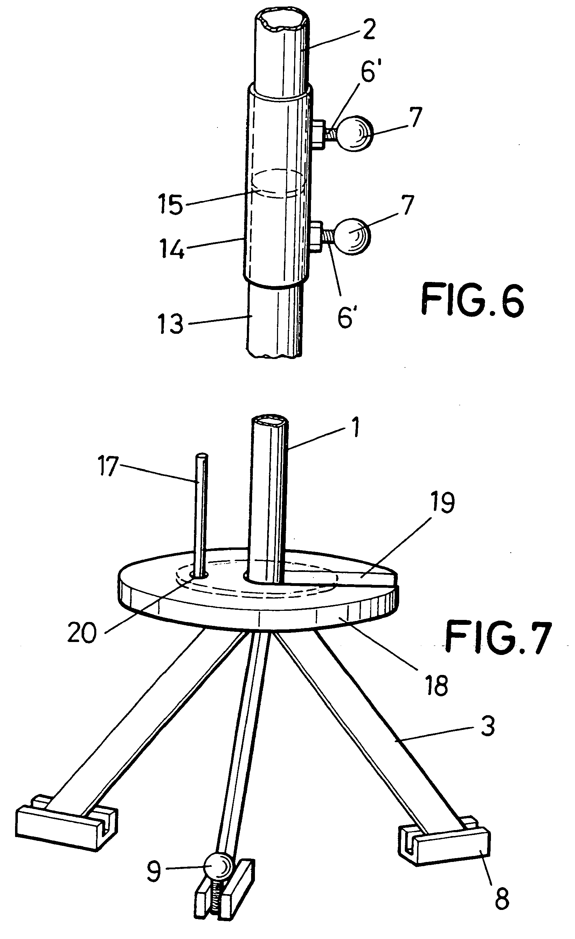

Another adapter (25), represented in figure 5, has a planar platform on the ends of which two parallel partitions (26) are established on which the axle of a roller (27) with freedom to turn is mounted as supporting element which allows the lateral displacement of the object supported by the trestle, this roller (27) being framed by two lateral prismatic blocks (28) in which some braking elements are established materialized in individual setscrews (29), with their respective knobs (30), which lock the roller and inhibit its rotation when the object located thereon has adopted the correct position. On the base platform of the adapter (25) there are some protuberances (31) which have some seats (22 ") for the bases (106) supporting the regulators (105).

In the case of the adapter (23), as well as in the adapter (25), there are some lower prolongations (32), with respective grooves (33) for the coupling thereof to the fishplates (4) or (4') of the bolsters (34) or (35).

In a possible embodiment, such as is reflected in figures 1 and 7, the legs (3') of the tripod (3) can be finished in individual bases (8) of wood or another soft material, preferably having their lower face fitted with a lining of rubber or another soft material which protects the supporting surface of the trestle adequately, at least one of them incorporating a regulating screw (9) for correct levelling and verticality of the column (100).

In another possible embodiment the ends of the legs (3') incorporate some regulators (105) welded to the legs (3') for regulating the latter in height and achieving perfect verticality in inclined locations preventing the trestle from wobbling when used on rough ground, a wheel (107) being fixed laterally to the sleeve (197) which on inclining the trestle constitutes the support on the floor and makes it possible to transport the trestle assembly in the manner of a trolley, this system of transport being used for extended movements or displacements.

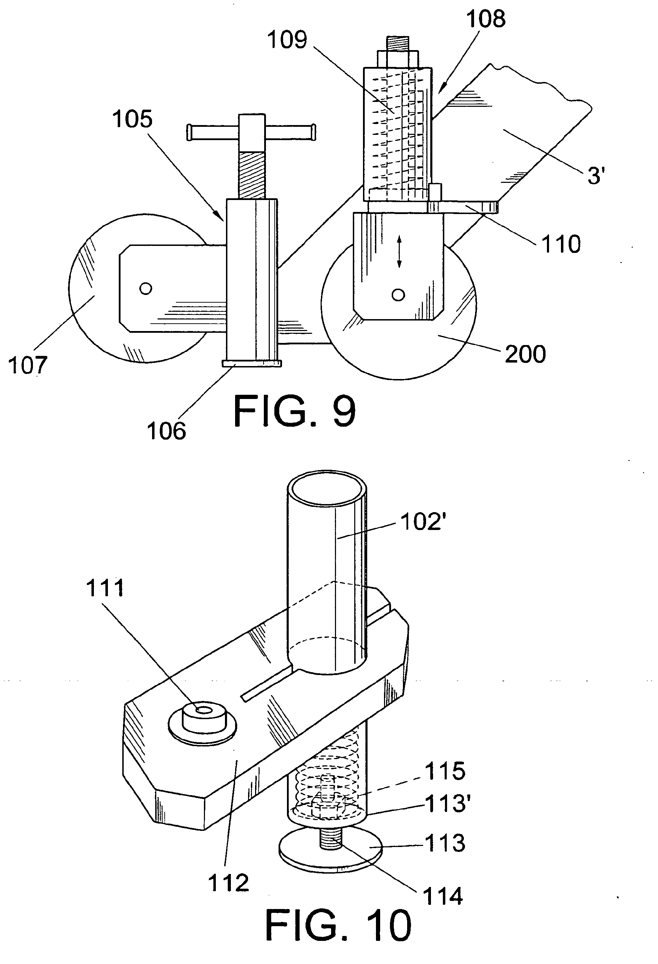

Also, in correspondence with the internal and lower part of the legs (3') the incorporation has been foreseen, such as is represented in figure 9, of a support and wheeled means (108) which has a wheeling mechanism (200) which serves to transport the trestle in the upright position, which is adjustable in height by means of an interior spring (109) which can be locked in the down position of the wheeling mechanism by means of a rotary blocking lever (110).

When the trestle is empty the support is made directly on the wheeling mechanism (200), while when the trestle receives weight, then the wheeling mechanism (200) can be raised so that the trestle rests on the supporting base (106) of the regulator (105).

The telescopic column (100) can have an extension tube (13) which engages in the lower tube (1) of the column (100) and is fastened to the same by means of a pair of setscrews (6') finished in corresponding knobs (7), said extension tube (13) being finished at its upper extremity in a sleeve (14) fitted with an interior butt (15) which receives the upper tube (2) of the column, the sleeve (14) being fastened both to the extension tube (13) and to the tube (2) connected to the bolster, by means of respective setscrews (6').

The lower tube (1) of the telescopic column (100) can be coupled inwardly to a lower length (102') which is prolonged below the tripod (3), which lower length (102') incorporates a spring (115) which abuts on the base (113') of the lower length (102') and absorbs the displacement in height of the lower tube (1), the incorporation being foreseen of a supplementary support constituted by a disc-shaped element (113) which rests on the floor and has a screw (114) which threads into a nut (115) fixed to the base (113') in order to regulate the height of the lower length (102').

The incorporation of a plumb line (111) has been foreseen for levelling the trestle, mounted on a rotary base (112) which is coupled on the column (100) at a level above the disc-shaped butt (16), or below the tripod (3), which rotary base (112) can rotate or move in the vertical sense to encounter the appropriate position.

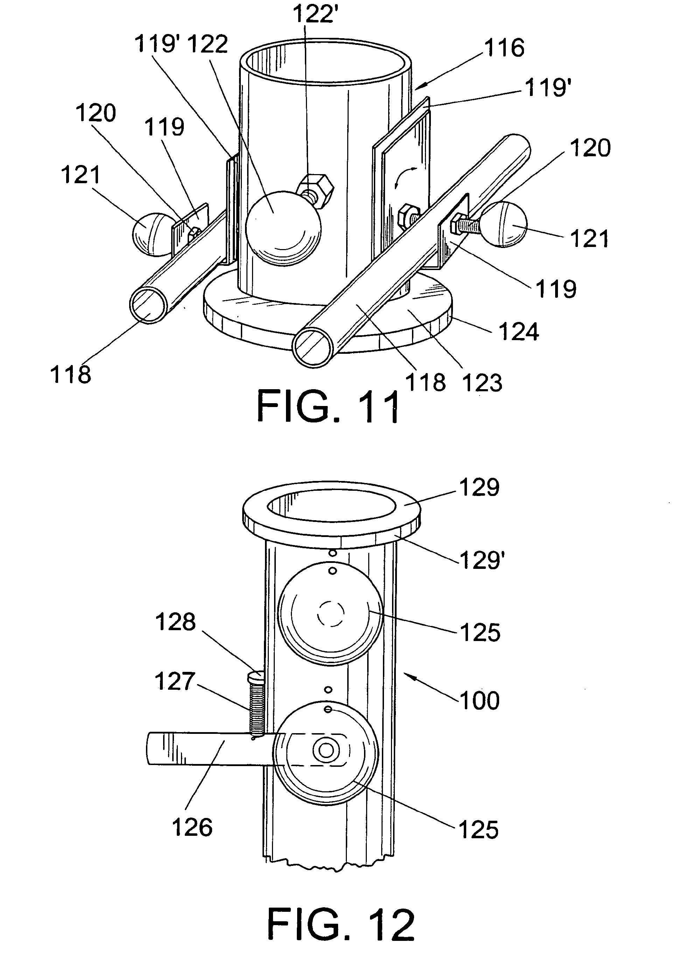

Moreover, it has been foreseen that the telescopic column (100) has mounted thereon some memory sleeves (116) or supplementary fasteners, represented in figure 11, which have a lower edge (123) finished in an impact-damping isolator (124), and is completed with some angle bars (119) firmly joined to some fishplates (119'), in turn joined laterally on the external surface of a sleeve (116), in the angle bars (119) of which are mounted some stabiliser bars (118) which are secured by means of setscrews (20) finished in knobs for manual operation (121) preventing the telescopic column (100) from retracting because of its telescopic nature.

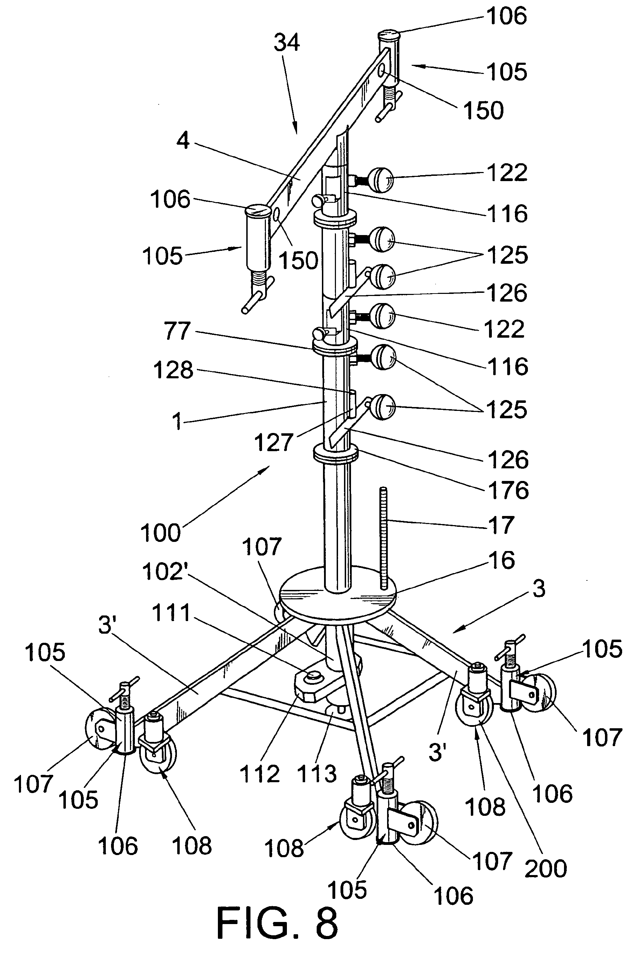

In figure 8 a safety device for automatic locking which is represented with detail in figure 12, can likewise be observed, consisting of some locking knobs (125) fitted with a screw which penetrates inwardly for locking the upper tube (2) of the telescopic column (100), and which comprises a fishplate (126) traversed by said screw to which it is fastened by means of some nuts mounted on the same screw, having a spring (127) held by one end to the fishplate (126) and by the other to a piece (128) joined laterally to the actual lengths of the telescopic column (100). Thus, whenever the extension of the trestle has to be altered, it is necessary to maintain the fishplate (126) depressed and when the latter is released, the plumb bob (125) will be blocked automatically, preventing thereby the tube or tubes which form the telescopic column (100) descend accidentally.

In correspondence with the upper part of each length of the column (100) an edge (129') has been foreseen with a band of rubber or of insulating material (29).

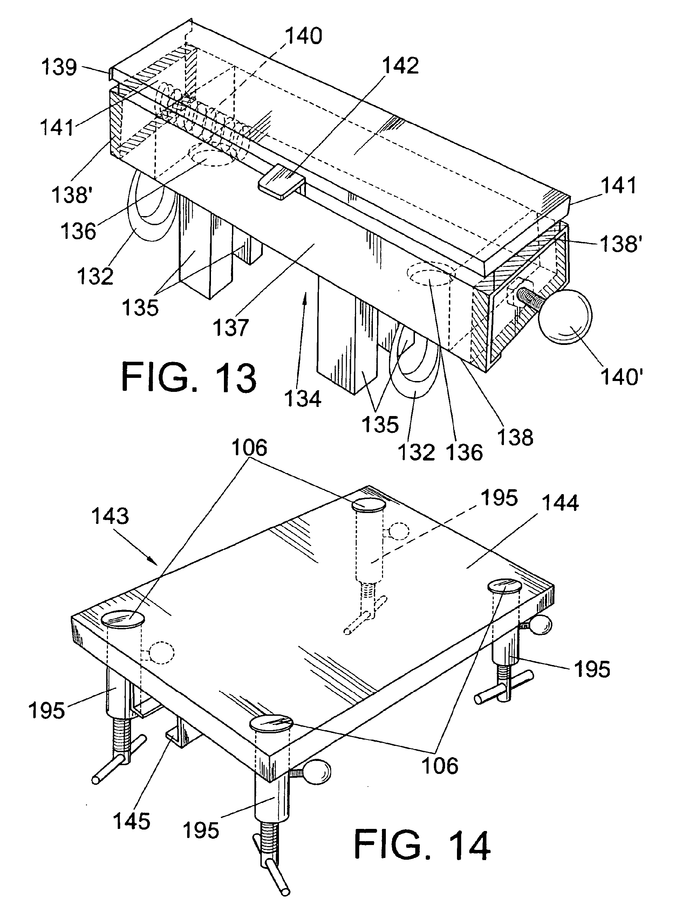

The trestle can incorporate another type of adapter, represented in figure 13, consisting of a supporting base (134) on which in turn other accessories can be mounted. The supporting base (134) has assembly means (135) for its coupling on the upper rim of the fishplate (4-4') to which some springs (132) are attached, as well as having some recesses (136) which fit on the supports (106) of the regulation means (105) established for this purpose on the ends of the fishplate (4-4'). Said support (134) has a small box (137), as well as an interior gusset (138), a butt (139) on the end and a recovery spring (140), whereby the supporting base (141) slides in the longitudinal direction with respect to the fishplate (4-4'), providing a third regulation to the vertical and transversal regulation. The stand (134) has on its upper part a supporting base (141) for mounting accessories as will later be explained, and also has a latch (142) for locking. In turn, this supporting base (141) also serves as a direct means of sustaining for objects.

In figure 14, an accessory (143) is observed constituted by a plane (144) with regulators (105), which accessory (143) increases the support surface in two dimensions, length and width, the regulators (105) being of double action or double extension in order to hold both flat and irregular pieces, whereby when a single trestle is used, a stable base will be available for pieces which are not very voluminous. The accessory includes underneath a guide (145) for mounting by sliding on supporting base (141) of the stand (134), and the guide (145) for which also has a transversal groove not represented, which will be in correspondence, in its assembly with the latch (142), to effect in this way a snap-fit between accessory and stand.

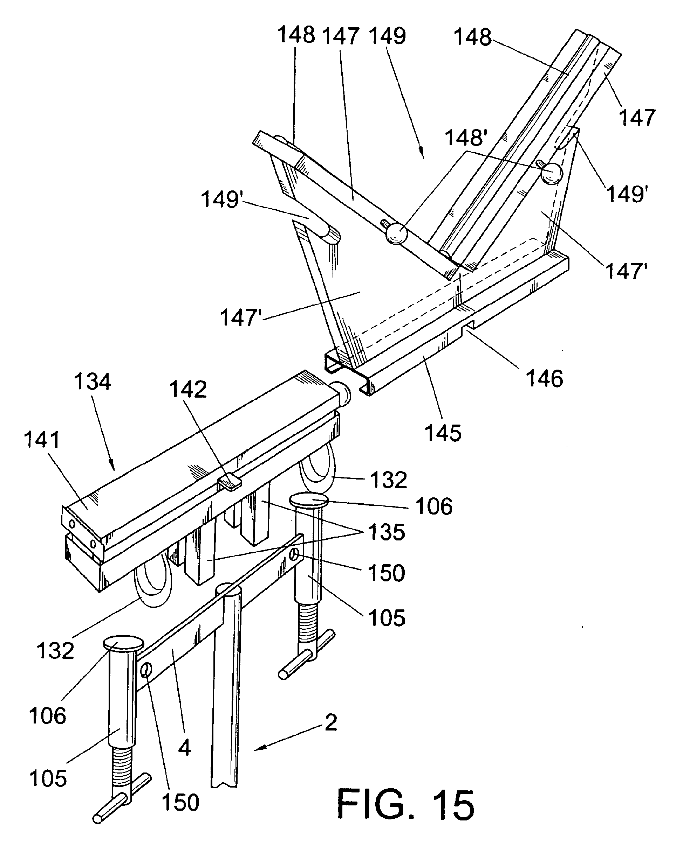

In figure 15 another accessory (149) is shown with the corresponding lower guide (145), the notch (146) being seen in this case for engagement on the latch (142) of the supporting base (134), the accessory of this figure 15 being constituted by two elements (147) forming a "V", with roller (148) able to be blocked by means of the knob (148') for support and retention of elements having circular, oval, polygonal, etc. shape. These elements are mounted on the base (147') which has on its sides some notches (149') for mounting stabiliser bars. In this figure 15 it can be observed how this accessory through its guide (145), is in a position to be mounted on the stand (134) which in turn is in a position to be mounted on the fishplate (4) of a bolster.

As a variant of the bolster (36) the possibility is envisaged that the extendable arms of the bolster (36) can be rotary, both inclined to the right and left, and forward and backward, with respect to the fishplate (4) of the bolster (36) by means of a rotary mechanism defined between the ends of the main fishplate and the external tubes (153) of the extendable arms.

Each rotary mechanism constitutes a first semi-circumferential plate (155') joined to the external tube (153), which plate hinges together with the latter with respect to a batten (201) on a screw (154'), which batten (201) in turn is joined perpendicularly to a second semi-circumferential plate (155) which hinges with respect to the fishplate (4) on a screw (154), it being foreseen that each of the semi-circumferential plates (155-155') be provided with an arched groove (156-156') in which a screw (157-157') sits which threads into a nut (159 " -159 ''') with a tightening washer (159-159') and manually operated knob (158-158') which allows the position of the first semi-circumferential plate (155') to be blocked with respect to the batten (201) regulating the forward or backward inclination of the external tube (153) with respect to the batten (201), as well as allowing the position of the second semi-circumferential plate (155) to be blocked with respect to the fishplate (4) regulating the inclination to the right or left of the batten (201) and integral with the first semi-circumferential plate (155') and therefore with the external tube (153).

With the object of assuring the vertical position of the external tube (153) the mechanism is completed with some locking levers (160-160') which emerge from the fishplate (4) and from the batten (201) respectively, which are provided with springs which push the levers (160-160') and engage them in some grooves which each semi-circumferential plate (155-155') has on its curved part, locking the vertical position of the tube (153).

Another characteristic of the invention consists of the possibility of mounting an adaptable hoist on the bolster or bolsters of the trestle, for which it has been foreseen that the fishplates (4-4') of the different bolsters (34-35-36) have a hole (150) in the proximity of each of their ends which serve to house individual tubes (161) which are captured by means of some fastening sleeves (162), whereby those tubes (161) serve not only as base for mounting the hoist, but also add stiffness to the trestle assemblies.

The hoist is mounted by means of some fastening angle bars (163) in a position which will later be secured by means of a lever (163'), the latter being connected with a spring (163 ") so that once the angle bars (163) are inserted they help said lever (163') to remain fixed in the hoist engagement system.

The hoist is constituted by one vertical and two horizontal arms, a lower one and an upper one, whereby the latter is formed by a central and external tube (166) on which is mounted in a displaceable manner an internal tube (167) which carries a drive motor on one end (168) and some pulleys (169) on both ends, guiding a cable (170') with a fastening hook provided with a weight (170 "), whereby the displacement of the internal tube (167) allows the load to be gathered conveniently with respect to the bolster of the trestle. The displacement of the internal tube (167) with respect to the external tube (166) is carried out by means of bearings (170).

The lower horizontal arm is formed by two tubes (165) and (165'), this last one is firmly attached to the tube (164) of the vertical arm and is inserted inside the tube (165), the extension between both being fixed by means of the knob (172').

The vertical arm of said hoist is also formed by two tubes (164) and (164') which fit one inside the other and which regulate said hoist in height, whereby inside the internal tube (164'), a spring (171) is mounted with some pieces on its ends, being completed moreover with knobs (172) which secure both tubes (164) and (164') at the extension desired, namely the most appropriate.

The two pieces foreseen on the ends of the spring (171), are those referred to with (173) and (174), this latter being joined to the base of the internal tube (164') and the upper one (173) abutting against a hoop (173') which is mounted on a rod (173 ") which is secured to the base of the external tube (164), whereby the result is that the spring (171) pulls the interior tube (164') upwards to facilitate the task of extending the arm.

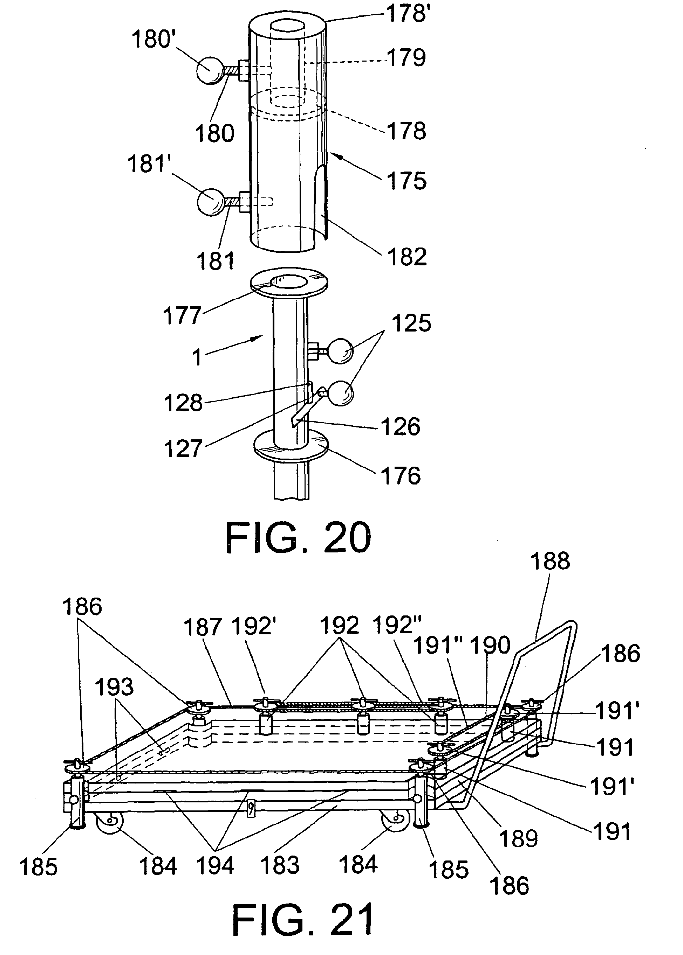

The telescopic column (100), is completed, as can be seen in figure 20 with a device of intermediate size, constituted from a sleeve (175) which is mounted on the lower tube (1) of the telescopic column (100), on which lower tube (1) a lower hoop (176) and an upper hoop (177) are foreseen, as well as corresponding screws worked by the locking knobs (125), represented in figures 8-12 and 20.

Hence, the sleeve (175) is positioned on the lower tube (1) hugging the hoop (176), while the hoop (177) abuts against another hoop (178) established for this purpose on the intermediate interior part of the sleeve (175), between said intermediate hoop (178) and the upper hoop (178') a tube (179) is mounted which has the same diameter as that which forms the lower tube (1) of the telescopic column (100), whereby that tube (179) is traversed by the setscrew (180) with its knob (180') which secures the position of the extendable tube, while the sleeve (175) is fixed and retained on the lower tube (1) by means of the setscrew (181) with its knob (181'), such sleeve (175) having an opening (182) in the longitudinal sense to permit the passage, in the sliding thereof over the lower tube (1), of the knobs (125) with their setscrews.

Thus, when the sleeve (175) is inserted in the lower tube (1), it abuts against the latter and the necessary prolongation is produced when the trestle needs an extension in length.

Besides the systems already described, of manual lifting, which provide a stable support, it is possible to complement the trestle with a pneumatic or hydraulic system, operated by remote control or via direct connection, as well as by a motor-driven screw, adding the possibility whereby the telescopic trestles can lift pieces of great weight.

Finally, in figure 21, a platform is shown with which the described trestle can be completed, the function of which platform is to facilitate work when a common and transportable surface is needed for one or more trestles, mainly when working with systems of elevation employing hydraulic, pneumatic or another feeding system which requires an associated equipment, which platform can moreover be moved by manual means or have an autonomous motor adapted to it to facilitate the task.

The platform fundamentally has a lower base (183) with wheels (184) for its displacement, as well as adjustable stabilizers (185) for standing on the floor, which are locked when the platform has achieved its desired position and the stabilizers and regulators (185) of which are double action or extension and can be adjustable independently or jointly, in which second case it has been foreseen that in the upper part of the regulators (185) some pinions (186) are included over which a common chain (187) runs the displacement of which involves the rotation of all the pinions (186) and therefore the simultaneous regulation of all the stabilizers (185).

This system described is used for flat floors with little irregularity, simplifying the anchoring of the platform, since with the operation of a regulator, through being mutually connected with the other regulators by means of a chain, all are stabilized at the same time, whereby for cases in which a more severe adaptation is required, the system of independent regulation will be used.

From the lower part of the aforesaid base (183), emerges a transporting handle (188), for steering the actual platform. The running wheels (184) can have two of them fixed and the other two able to swivel or have all of them able to swivel. These wheels can be replaced by ball systems.

This platform is also completed with a second base joined to the lower part by means of some hinges or axles (193) in correspondence with one of the ends, while the opposite end will include some regulators (191) fitted with pinions (191') and common chain (191 ") which abuts on the lower base (183), and which when driven elevate that part of the adjustable base, referred to in general with the number (189).

A third base (190) exists joined to the second by hinges or axles (194) in its longitudinal part, and other regulators (192) with pinions (192') and chain (192 ") to regulate and level the lateral position. The upper platform will be fitted with some plumb lines.

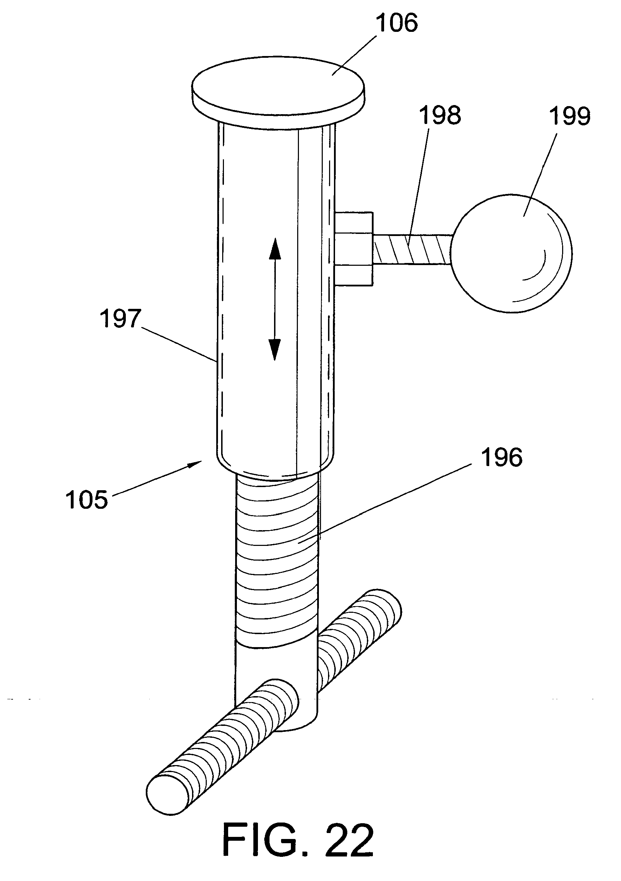

Moreover the means of regulation (105) previously described can consist, as one observes in figure 22, of an interior regulator (196), terminating on the supporting base (106), which slides inside a sleeve (197), the position thereof being fixed by means of screw (198) operated by a knob (199).

## Claims

1. - Multipurpose trestle of the type which comprises a telescopic column (100) in which at least a lower tube (1) and an upper tube (2) form part, which is finished underneath in a tripod (3) provided with legs (3'), and which is finished on top in a transversal fishplate (4) which forms part of a supporting bolster (34-35-36) and which is fitted with means of support consisting of some regulators (105) which can act directly as supportive element or they can do so with the interposition of an adapter, **characterised in that** said regulators (105) comprise a sleeve (197) and a vertical screw (196) inside that sleeve (197), operated by a lever (11), which ends at the top in a supporting base (106), and also the column (100) incorporates at a lower level, immediately above the tripod (3), a disc-shaped butt (16) provided with a removable fastening pin (17), in a vertical arrangement, eccentric and parallel to the column (100), said disc-shaped butt (16) being intended to receive one or more counterweights (18) to augment the stability of the trestle, especially when the bolster (34-35-36) is at a considerable height, which counterweights (18) come with a radial incision (19) for the lateral coupling thereof to the column (100) and with a hole (20) for the coupling of the fastening pin (17) which immobilizes the counterweight (18).

2. - Multipurpose trestle according to claim 1 **characterised in that** the bolster (34) of the trestle is constituted by a transversal fishplate (4) firmly joined to the upper extremity of the column (100), and finished at its ends in individual regulators (105) located in a symmetrical arrangement with respect to the tube (2) which have supporting bases (106) which constitute the sustaining area of the trestle.

3. - Multipurpose trestle according to claim 1 **characterised in that** the bolster (35) is constituted by a fishplate (4) which is finished at its ends in individual transversal fishplates (4'), finished in turn by four regulators (105), fitted with four supporting bases (106) in symmetrical positions and separated with respect to the column (100) constituting the sustaining area of the trestle.

4. - Multipurpose trestle according to claim 1 **characterised in that** the bolster (36) is formed by a fishplate (4) which has on its ends some extendable arms which comprise an external tube (153) and an internal tube (151), moveable inside the external tube (153), to which it is fixed by means of some fastening knobs (152), corresponding fishplates (4') being mounted on the internal tubes (151) said fishplates being fitted with regulators (105) on their ends.

5. - Multipurpose trestle according to claim 1 **characterised in that** it incorporates an adapter (21) materialized in a prismatic-rectangular batten which offers a planar and continuous support, provided on its lower face with some cylindrical housings (22) for coupling the supporting bases (106) of the regulators (105).

6. - Multipurpose trestle according to claim 1 **characterised in that** it incorporates an adapter (23) consisting of a piece whose upper face (24) configures an obtuse dihedron appropriate for constituting the support for cylindrical objects which may tend to roll sideways, and it has on its lower base cylindrical housings (22') for coupling the supporting bases (106) of the regulators (105).

7. - Multipurpose trestle according to claim 1 **characterised in that** it incorporates an adapter (25) which has a planar platform on the ends of which two parallel partitions (26) are established on which is mounted with freedom of rotation the axle of a roller (27) as supporting element which allows the lateral displacement of the object supported by the trestle, said roller (27) being framed by two prismatic-lateral blocks (28) in which some braking elements are established materialized in individual setscrews (29), with their respective knobs (30) which block the roller and prevent it turning once the object located thereon has taken up the correct position, there being established on the platform base of the adapter (25) some protuberances (31) which have some housings (22 ") for the supporting bases (106) of the regulators (105).

8. - Multipurpose trestle according to claims 6 and 7 **characterised in that** the adapter (23-25) has some lower prolongations (32), with respective grooves (33) for their coupling to the fishplates (4-4') of the bolsters (34-35).

9. - Multipurpose trestle according to claim 1 **characterised in that** the legs (3') of the tripod (3) are finished in individual bases (8), at least one of them incorporating a regulating screw (9) for the correct levelling and verticality of the column (100).

10. - Multipurpose trestle according to claim 8 **characterised in that** the bases (8) are fitted on their lower face with a lining which protects the supporting surface of the trestle.

11. - Multipurpose trestle according to claim 1 **characterised in that** the ends of the legs (3') incorporate some regulators (105) welded to the legs (3') for the regulation in height thereof and to achieve perfect verticality in inclined places preventing the trestle from wobbling when adapting to irregular ground, being fixed laterally on the case (197) a wheel (107) which when the trestle is tilted constitutes the support on the floor and makes it possible to transport the trestle assembly in the manner of a trolley.

12. - Multipurpose trestle according to claim 1 or 11 **characterised in that** in correspondence with the internal and lower part of the legs (3') the incorporation has been foreseen of a supporting and wheeled mechanism (108) which has a wheeling means (200) which serves to transport the trestle in the upright position, which is adjustable in height by means of an interior spring (109) which can be locked in the down position of the wheeling means (200) by means of a rotary locking lever (110).

13. - Multipurpose trestle according to claim 1 **characterised in that** the telescopic column (100) has an extension tube (13) which fits on the lower tube (1) of the column (100) and is fastened to the same by means of a pair of setscrews (6') terminated in corresponding knobs (7), said extension tube (13) being finished at its upper extremity in a sleeve (14) fitted with an interior butt (15) which receives the upper tube (2) of the column, the sleeve (14) being secured both to the extension tube (13) and to the upper tube (2) by means of respective setscrews (6').

14. - Multipurpose trestle according to claim 1 **characterised in that** the lower tube (1) of the telescopic column (100) is coupled inwardly to a lower length (102') which is prolonged below the tripod (3), which lower length (102') incorporates a spring (115) which abuts on the base (113') of the lower length (102') and absorbs the displacement in height of the lower tube (1), the incorporation being foreseen of a complementary support constituted by a disc-shaped element (113) which rests on the floor and has a screw (114) which threads into a nut (115) fixed to the base (113') to regulate the height of the lower length (102').

15. - Multipurpose trestle according to claim 1 **characterised in that** it incorporates a plumb line (111) for levelling the trestle, mounted on a rotary base (112) which is coupled on the column (100) and which can rotate or move in the vertical sense to find the appropriate position.

16. - Multipurpose trestle according to claim 15 **characterised in that** the rotary base (112) is coupled on the column (100) at a level above the disc-shaped butt (16).

17. - Multipurpose trestle according to claim 15 **characterised in that** the rotary base (112) is coupled on the column (100) below the tripod (3).

18. - Multipurpose trestle according to claim 1 **characterised in that** over the telescopic column (100) some memory sleeves (116) are mounted which have a lower edge (123) finished in an impact-damping isolator (124), and on the external surface of the sleeve (116) some angle bars (119) joined to some fishplates (119') are laterally joined, on which angle bars (119) are mounted some stabiliser bars (118) which are secured by means of setscrews (20) finished in knobs for manual operation (121) preventing the telescopic column (100) from being able to retract by virtue of its telescopic nature.

19. - Multipurpose trestle according to claim 1 **characterised in that** it incorporates a safety device for automatic locking to prevent the accidental descent of the tubes which form the telescopic column (100) consisting of some locking knobs (125) fitted with a screw which penetrates inwardly to lock the upper tube (2) of the telescopic column (100), and which comprises a fishplate (126) traversed by said screw to which it is fastened by means of some nuts mounted on the same screw, having a spring (127) held at one end to the fishplate (126) and at the other to a piece (128) joined laterally to the actual lengths of the telescopic column (100).

20. - Multipurpose trestle according to claim 2 **characterised in that** it incorporates a supporting base (134), with assembly means (135) on the upper rim of the fishplate (4) to which some springs (132) are fastened, as well as having some recesses (136) which fit on the supports (106) of the regulation means (105) established for this purpose on the ends of the fishplate (4) said supporting base (134) having a small box (137), as well as an interior gusset (138), a butt (139) on the end and a recovery spring (140), whereby the supporting base (134) slides in the longitudinal direction with respect to the fishplate (4), providing an additional regulation to the vertical and transversal regulation, the supporting base (134) having on its upper part a plate (141) for the mounting of accessories or for directly holding objects, having likewise a locking latch (142).

21. - Multipurpose trestle according to claim 3 or 4 **characterised in that** it incorporates a supporting base (134), with assembly means (135) on the upper rim of the fishplate (4-4') to which some springs (132) are fastened, as well as having some recesses (136) which fit on the supports (106) of the regulation means (105) established for this purpose on the ends of the fishplate (4-4'), said supporting base (134) having a small box (137), as well as an interior gusset (138), a butt (139) on the end and a recovery spring (140), whereby the supporting base (134) slides in the longitudinal direction with respect to the fishplate (4-4'), providing an additional regulation to the vertical and transversal regulation, the supporting base (134) having on its upper part a plate (141) for the mounting of accessories or for directly holding objects, having likewise a locking latch (142).

22. - Multipurpose trestle according to claim 20 or 21 **characterised in that** it incorporates a first accessory (143) constituted by a plane (144) with regulators (105), which first accessory (143) increases the support surface in two dimensions, length and width, the regulators (105) being of double effect or double extension to hold both flat and irregular pieces, whereby when a single trestle is used a stable base will be achieved for pieces which are not very voluminous, the accessory including underneath a guide (145) for the assembly by sliding on the plate (141) of the supporting base (134), and which guide (145) also has a transversal groove which will correspond, in its assembly with the latch (142), in order to effect a snap-fit between accessory (143) and the supporting base (134).

23. - Multipurpose trestle according to claim 22 **characterised in that** it incorporates a second accessory (149) with the corresponding lower guide (145), having a notch (146) for engagement on the latch (142) of the supporting base (134), the second accessory (149) being constituted by two elements (147) configuring a "V", with roller (148) which can be locked by means of the a (148') for supporting and holding elements of circular, oval, polygonal, and other shapes, which are mounted on a base (147') which has some notches (149') on its side for the mounting of stabiliser bars.

24. - Multipurpose trestle according to claim 4 **characterised in that** the extendable arms of the bolster (36) can be rotary, inclining both to the right and left, and forward and backward, with respect to the fishplate (4) of the bolster (36) by means of a rotary mechanism defined between the ends of the fishplate (4) and the external tubes (153) of the extendable arms which comprises a first semi-circumferential plate (155') joined to the external tube (153), which hinges together with the latter with respect to a batten (201) on a screw (154'), which batten (201) in turn is joined perpendicularly to a second semi-circumferential plate (155) which hinges with respect to the fishplate (4) on a screw (154), it being foreseen that each of the semi-circumferential plates (155-155') be fitted with an arched groove (156-156') in which a screw (157-157') runs which threads in a nut (159 " -159 "') with tightening washers (159-159') and with a knob for manual operation (158-158'), which allow blocking of the position of the first semi-circumferential plate (155') with respect to the batten (201) regulating the inclination of the external tube (153) toward the front or back with respect to the batten (201), as well as allowing the blocking of the position of the second semi-circumferential plate (155) with respect to the fishplate (4) regulating the inclination to the right or left of the batten (201) and jointly of the first semi-circumferential plate (155') and therefore of the external tube (153).

25. - Multipurpose trestle according to claim 24 **characterised in that** with the object of assuring the vertical position of the external tube (153) the rotary mechanism is completed with some locking levers (160-160') which emerge from the fishplate (4) and from the batten (201) respectively, which are provided with springs which push the levers (160-160') fixing them in some grooves which each semi-circumferential plate (155-155') has in its curved part locking the vertical position of the tube (153).

26. - Multipurpose trestle, according to claim 2 **characterised in that** on the upper part of the bolster (34-35-36) an adaptable hoist is mounted whose means of coupling is constituted based on a first pair of tubes (161) passing through holes (150) foreseen for this purpose in the corresponding fishplate(4), and close to the ends of such fishplate (4), said first pair of tubes (161) being held by means of corresponding retaining sleeves (162), the assembly of the hoist being carried out by means of some angle bar fasteners (163) engaged in the first pair of tubes (161), the assembly of the hoist being locked by means of a lever (163') and which are joined to a union plate (165 ") and the latter in turn to a lower horizontal tube (165) through which a second tube (165') runs, the extension of both being fixed by means of a knob (172'), it having been foreseen that said adaptable hoist has a vertical arm consisting of vertical tubes (164, 164') telescopically mounted, the first of them defined by an outer vertical tube (164) joined to the second tube (165') and the other defined by an inner vertical tube (164') which is regulated in height, whereby inside the inner vertical tube (164') a spring (171) is mounted with a first piece (173) and a second piece (174) on its ends, the last being joined to the lower part of the outer vertical tube (164) and the first piece (173) which abuts against a hoop (173') joined to a bar (173") which in turn is joined on a plate (173 "') of the lower base of the outer vertical tube (164), being completed with knobs (172) which secure the outer vertical tube (164) and the inner vertical tube (164') in the desired extension, while the upper end of the inner vertical tube (164') is secured to an upper horizontal arm formed by an outer horizontal tube (166) secured to the upper end of the inner vertical tube (164'), while an inner horizontal tube (167) is moveable by means of bearings (170) inside the outer horizontal tube (166) in order to be able to regulate the hoist with respect to the bolster of the trestle, the ends of said horizontal arm, specifically the inner horizontal tube (167), having pulleys (169) for passing a cable (170') for suspending the load with a fastening hook provided with a weight (170 "), while on one of the ends of the inner horizontal tube (167) a drive motor (168) is also incorporated.

27. - Multipurpose trestle, according to claim 3 or 4 **characterised in that** on the upper part of the bolster (34-35-36) an adaptable hoist is mounted, whose means of coupling is constituted based on a first pair of tubes (161) passing through holes (150) foreseen for this purpose in the corresponding fishplate (4-4'), and close to the ends of such fishplate (4-4'), said first pair of tubes (161) being held by means of corresponding retaining sleeves (162), the assembly of the hoist being carried out by means of some angle bar fasteners (163) engaged in the first pair of tubes (161), the assembly of the hoist being locked by means of a lever (163') and which are joined to a union plate (165 ") and the latter in turn to a lower horizontal tube (165) through which a second tube (165') runs, the extension of both being fixed by means of a knob (172'), it having been foreseen that said adaptable hoist has a vertical arm consisting of vertical tubes (164, 164') telescopically mounted, the first of them defined by an outer vertical tube (164) joined to the second tube (165') and the other defined by an inner vertical tube (164') which is regulated in height, whereby inside the inner vertical tube (164') a spring (171) is mounted with a first piece (173) and a second piece (174) on its ends, the last being joined to the lower part of the outer vertical tube (164) and the first piece (173) which abuts against a hoop (173') joined to the bar (173") which in turn is joined on the plate (173 "') of the lower base of the outer vertical tube (164), being completed with knobs (172) which secure the outer vertical tube (164) and the inner vertical tube (164') in the desired extension, while the upper end of the inner vertical tube (164') is secured to an upper horizontal arm formed by an outer horizontal tube (166) secured to the upper end of the inner vertical tube (164'), while an inner horizontal tube (167) is moveable by means of bearings (170) inside the outer horizontal tube (166) in order to be able to regulate the hoist with respect to the bolster of the trestle, the ends of said horizontal arm, specifically the inner horizontal tube (167), having pulleys (169) for passing a cable (170') for suspending the load with a fastening hook provided with a weight (170 "), while on one of the ends of the inner horizontal tube (167) a drive motor (168) is also incorporated.

28. - Multipurpose trestle, according to claim 1, **characterised in that** an intermediate size sleeve (175) is mounted on the lower tube (1) of the telescopic column, on which lower tube (1)a lower hoop (176) and an upper hoop (177) are foreseen" said sleeve (175) being positioned on the lower tube (1) hugging the lower hoop (176), while the upper hoop (177) abuts against an intermediate hoop (178) established on the intermediate interior part of the sleeve (175), between said intermediate hoop (178) and the upper hoop (178') an extendable tube (179) is mounted, whereby said extendable tube (179) is traversed by a setscrew (180) with its knob (180') which secures its position, while the sleeve (175) is fixed and retained on the lower tube (1) by means of a setscrew (181) with its knob (181'), such sleeve (175) having an opening (182) in the longitudinal sense to permit the passage, in the sliding thereof over the lower tube (1), of other knobs (125) with their setscrews.

29. - Multipurpose trestle, according to claim 1, **characterised in that** the regulation means (105) can be of double effect or extension and consist of an interior regulator (196), terminated on the supporting base (106), which slides inside the sleeve (197), the position of the interior regulator (196) being fixed by means of a screw (198) operated by a knob (199).

30. - Multipurpose trestle, according to claim 1, **characterised in that** the telescopic column (100) is raised by means of a motor-driven screw.

31. - Multipurpose trestle, according to claim 1, **characterised in that** the telescopic column (100) is raised by means of a pneumatic system.

32. - Multipurpose trestle, according to claim 1, **characterised in that** the telescopic column (100) is raised by means of a hydraulic system.

33. - Multipurpose trestle, according to claim 1, **characterised in that** it constitutes a platform for the transport of one or more trestles, said platform being capable of being moved by manual or autonomous means, being constituted mainly by means of a lower base (183) with displacement wheels (184) and stabilizer supports of double action or extension (185), the upper end of these stabilizers having pinions (186) over which passes a chain (187) in a meshed fashion which facilitates the simultaneous regulation of all the stabilizers or regulators (185), it being also possible to regulate the latter independently, it having been foreseen that a transport handle (188) emerges from below the base (183), while above such base (183) there is a second base (189) linked to the first by means of hinges (193) through one of the front ends, while the opposite one has regulators (191) with pinions (191') and chain (191 ") simultaneously adjustable to level the front position, it having been foreseen that on said second base (189) a third base (190) is mounted both joined, on one of their longitudinal ends by means of hinges or axles (194), and on the edge opposite the hinging with regulators (192) with pinions (192') and chain (192 ") in order to regulate and level the lateral position of the base (190) and the latter (190) having on the upper part some plumb bobs.

## Patentansprüche

1. - Mehrzweckbock dieses Typs ist **gekennzeichnet durch** einen ausziehbaren Ständer (100), in welchem mindestens ein unteres Rohr (1) und ein oberes Rohr (2) einen Teil bilden, welche darunter in einem Stativ (3), das mit Füßen (3') ausgestattet ist, enden, und welches darauf in einer schrägen Lasche (4) endet, die zu einem stützenden Hauptquerträger (34-35-36) gehört und die mit stützenden Mitteln ausgestattet ist, bestehend aus einigen Regulatoren (105) welche unmittelbar als unterstützendes Element oder aber mit der Zwischenschaltung eines Adapters agieren können; besagte Regulatoren (105) sind so **gekennzeichnet**, dass sie eine Buchse (197) und eine vertikale Schraube (196) in dieser Buchse (197) beinhalten, betrieben mit einem Hebel (11), welcher oberhalb in einer Stützbasis(106) endet; auch ist der Ständer (100) auf einem unteren Level eingearbeitet; unmittelbar über dem Stativ (3) befindet sich ein scheibenförmiges Endstück (16) ausgestattet mit einem entfernbaren Befestigungsbolzen (17) in einer vertikalen Anordnung außermittig und parallel zu dem Ständer (100); besagtes scheibenförmiges Endstück (16) ist dazu gedacht, ein oder mehrere Gegengewichte (18) aufzunehmen, um die Stabilität des Bocks zu verbessern, vor allem wenn sich der Hauptquerträger (34-35-36) auf einer erheblichen Höhe befindet; die Gegengewichte (18) sind gekoppelt an einen radialen Einschnitt (19) für die laterale Ankopplung darauf an den Ständer (100) und mit einem Loch (20) für die Ankopplung des Befestigungsbolzens (17) welcher das Gegengewicht (18) immobilisiert.

2. Mehrzweckbock ist laut Anspruch 1 **dadurch gekennzeichnet, dass** der Hauptquerträger (34) des Bocks durch eine Schräglasche errichtet (4) mit dem obere Extrem des Ständers (100) fest verbunden ist und an dessen Ende in einzelnen Regulatoren (105) endet, die in einer symmetrischen Anordnung zwecks des Rohrs (2) platziert sind, welche Stützbasen (106) haben, die die tragende Fläche des Bocks bilden.

3. Mehrzweckbock ist laut Anspruch 1 **dadurch gekennzeichnet, dass** der Hauptquerträger (35) durch eine Lasche errichtet ist (4), welche an den Enden mit einzelnen Schräglaschen (4') endet die wiederum mit vier Regulatoren (105) enden, ausgerüstet mit vier Stützbasen (106) in symmetrischen Positionen und getrennt zwecks des Ständer (100) die tragende Fläche des Bocks bilden.

4. Mehrzweckbock ist laut Anspruch 1 **dadurch gekennzeichnet, dass** der Hauptquerträger (36) durch eine Lasche (4) gebildet wird welche an den Enden einige ausziehbare Arme hat die ein externes Rohr (153) und ein internes Rohr (151) enthalten das sich beweglich innerhalb des externen Rohres (153) befindet an welches es durch einige Befestigungsknöpfe (152) fixiert ist; dazugehörige Laschen (4') sind an den internen Rohren (151) montiert; besagte Laschen sind an den Enden mit Regulatoren (105) ausgestattet.

5. Mehrzweckbock ist laut Anspruch 1 **dadurch gekennzeichnet, dass** er einen Adapter (21) beinhaltet, der als prismatisch-rechteckige Leiste Form annimmt die eine plane und kontinuierliche Stütze bietet; an der Auflagefläche ausgestattet mit einigen zylindrischen Gehäusen (22) zur Ankopplung der Stützbasis (106) der Regulatoren (105).

6. Mehrzweckbock ist laut Anspruch 1 **dadurch gekennzeichnet, dass** er einen Adapter (23) beinhaltet, bestehend aus einem Stück dessen Boden (24) ein stumpfes Dieder festlegt, welches zum Bilden der Stütze für ein zylindrisches Objekt angebracht ist, das dazu tendieren könnte zur Seite zu rollen; und es hat auf seiner unteren Basis zylindrische Gehäuse (22') zur Ankopplung der Stützbasen (106) von den Regulatoren (105).

7. Mehrzweckbock ist laut Anspruch 1 **dadurch gekennzeichnet, dass** er einen Adapter (25) beinhaltet der eine flache Plattform an den Enden hat von denen zwei parallele Partitionen (26) fixiert sind an welchen mit Freiheit zur Rotation die Achse einer Rolle (27) als Stützelement montiert ist, welche die laterale Verlagerung des Objekts gestützt durch den Bock erlaubt; besagte Rolle (27) ist umrandet von zwei prismatisch-lateralen Blöcken (28), in die einige Bremselemente eingeführt sind welche aus einzelnen Stellschrauben (29) mit deren zugehörigen Knöpfen (30) bestehen, welche die Rolle blockieren und sie davon abhalten sich zu drehen sobald das Objekt fixiert ist und daher die korrekte Position eingenommen hat; an dem Boden der Plattform des Adapters (25) sind einige Protuberanzen (31) gebildet die einige Gehäusen (22') haben für die Stützbasen (106) der Regulatoren (105).

8. Mehrzweckbock ist laut Anspruch 6 und 7 **dadurch gekennzeichnet, dass** der Adapter (23-25) einige untere Verlängerungen (32) mit entsprechenden Nuten (33) für die Ankopplung an die Laschen (4-4') des Hauptquerträger (34-35) hat.

9. Mehrzweckbock ist laut Anspruch 1 **dadurch gekennzeichnet, dass** die Füße (3') des Stativs (3) in einzelnen Basen (8) enden; mindestens eine von diesen beinhaltet eine Stellschraube (9) für den korrekten Abgleich und die Vertikalität des Ständers (100).

10. Mehrzweckbock ist laut Anspruch 8 **dadurch gekennzeichnet, dass** die Basen (8) an der Auflagefläche mit einer Auskleidung ausgestattet sind, welche die Stützoberfläche des Bockes schützt.

11. Mehrzweckbock ist laut Anspruch 1 **dadurch gekennzeichnet, dass** die Enden der Füße (3') einige Regulatoren (105) enthalten, die an die Füße (3') angeschweißt sind für die Höhenregulierung darauf und um eine perfekte Vertikalität an geneigten Plätzen zu erreichen und den Bock am Schwanken hindern wenn er an unebenen Boden angepasst wird; da er seitlich am Gehäuse (197) befestigt ist sorgt ein Rad (107) solange der Bock schräg ist für Halt auf dem Boden und ermöglicht den Transport des Montagebockes in der Art eines Karrens.

12. Mehrzweckbock ist laut Anspruch 1 oder 11 **dadurch gekennzeichnet, dass** in Übereinstimmung mit dem inneren und unteren Teil der Füße (3') die Aufnahme eines stützenden und beräderten Mechanismus (108) vorgesehen ist welcher Räder (200) hat, die zum Transport des Bockes in aufrechter Position dienen; diese sind höhenverstellbar durch eine innere Feder (109) welche in der unteren Position der Räder (200) durch einen drehbaren Sicherungshebel (110) gesichert werden kann.

13. Mehrzweckbock ist laut Anspruch 1 **dadurch gekennzeichnet, dass** der ausziehbare Ständer (100) ein Ansatzrohr (13) hat welches auf das untere Rohr (1) des Ständers (100) passt und das an demselben befestigt ist durch ein Paar Stellschrauben (6'), die in entsprechenden Knöpfe (7) enden; besagtes Ansatzrohr (13) endet an dem oberen Ende in einer Buchse (14) ausgerüstet mit einem inneren Endstück (15), welches das obere Rohr (2) des Ständers erfasst; die Buchse (14) ist am Ansatzrohr (13) und am oberen Rohr (2) durch jeweilige Stellschrauben (6') gesichert.

14. Mehrzweckbock ist laut Anspruch 1 **dadurch gekennzeichnet, dass** das untere Rohr (1) des ausziehbaren Ständers (100) nach innen zu einer unteren Länge (102') gekoppelt ist welche sich unter dem Stativ (3) verlängert; dessen untere Länge (102') eine Feder (115) beinhaltet welche an die Basis (113') der unteren Länge (102') angrenzt und die Höhenverschiebung des unteren Rohrs (1) abfängt; die Ausstattung ist als ergänzende Stütze gedacht gebildet aus einem scheibenförmigen Element (113) welches auf dem Boden bleibt und eine Schraube (114) hat die sich in eine Gewindemutter (115) eindreht die an der Basis (113') befestigt ist um die Höhe der unteren Länge (102') zu regulieren.

15. Mehrzweckbock ist laut Anspruch 1 **dadurch gekennzeichnet, dass** er mit einer Lotschnur (111) ausgestattet ist um den Bock anzupassen, montiert an der Drehbasis (112) welche an den Ständer (100) angekoppelt ist und welche sich im vertikalen Sinne drehen oder bewegen kann, um die passende Position zu finden.

16. Mehrzweckbock ist laut Anspruch 15 **dadurch gekennzeichnet, dass** die Drehbasis (112) an den Ständer (100) gekoppelt ist auf einer Ebene oberhalb des scheibenförmigen Endstücks (16).

17. Mehrzweckbock ist laut Anspruch 15 **dadurch gekennzeichnet, dass** die Drehbasis (112) an den Ständer (100) gekoppelt ist unterhalb des Stativs (3).

18. Mehrzweckbock ist laut Anspruch 1 **dadurch gekennzeichnet, dass** über dem ausfahrbaren Ständer (100) einige Speicherbuchsen (116) montiert sind welche eine Unterkante (123) haben, endend in einem stoßdämpfenden Isolator (124); und auf der äußeren Fläche der Buchse (116) sind einige mit einigen Laschen (119') verbundene Eckstäbe (119) lateral verbunden, an welchen Eckstäbe (119) montiert sind; einige Stabilisierungsstäbe (118) welche durch Stellschrauben (20) gesichert sind enden in Knöpfen zur manuellen Bedienung (121) die den ausfahrbaren Ständer (100) davon abhalten sich einfahren zu können aufgrund seiner Ausfahrbarkeit.

19. Mehrzweckbock ist laut Anspruch 1 **dadurch gekennzeichnet, dass** er mit einer Sicherheitsvorrichtung zur automatischen Sicherung ausgestattet ist um versehentliches Abrutschen der Rohre zu verhindern welche den ausfahrbaren Ständer (100) bilden, bestehend aus einigen Sperrknöpfen (125) ausgestattet mit einer Schraube die nach innen eindringt, um das obere Rohr (2) des ausfahrbaren Ständers (100) zu sichern und welches eine Lasche (126) umfasst die durchkreuzt wird von besagter Schraube an welche sie durch einige Muttern befestigt ist, die an dieselbe Schraube montiert sind die eine Feder (127) hat welche an einem Ende an die Lasche (126) gehalten wird und an dem anderen Ende an ein Stück (128), das seitlich mit den tatsächlichen Längen des ausfahrbaren Ständers (100) verbunden ist.

20. Mehrzweckbock ist laut Anspruch 2 **dadurch gekennzeichnet, dass** er eine Stützbasis (134) beinhaltet, mit Aufbaumitteln (135) am Oberrand der Lasche (4) an welche einige Federn (132) befestigt sind und die über einige Vertiefungen (136) verfügt, welche auf die Stützen (106) der Regulationsmittel (105) passen die zu diesem Zweck an die Enden der Lasche (4) anknüpfen; besagte Stützbasis (134) hat eine kleine Box (137) sowie ein inneres Eckblech (138), ein Endstück (139) am Ende und eine Rückführungsfeder (140), wobei die Stützbasis (134) zwecks der Lasche (4) in die Längsrichtung rutscht, eine zusätzliche Regulierung zu der vertikalen und transversalen Regulierung bietend; die Stützbasis (134) hat auf ihrem oberen Teil eine Platte (141) zur Montage von Zubehör oder für unmittelbar tragende Objekte die ebenfalls über einen Verschlussriegel (142) verfügen.

21. Mehrzweckbock ist laut Anspruch 3 oder 4 **dadurch gekennzeichnet, dass** er eine Stützbasis (134) mit Aufbaumitteln (135) am Oberrand der Lasche (4-4') beinhaltet an welcher einige Federn (132) befestigt sind und die darüber hinaus über einige Vertiefungen (136) verfügt welche auf die Stützen (106) der Regulierungsmittel (105) passen die zu diesem Zweck an die Enden der Lasche (4-4') montiert sind; besagte Stützbasis (105) hat eine kleine Box (137) sowie ein inneres Eckblech (138), ein Endstück (139) am Ende und eine Rückführungsfeder (140) wodurch die Stützbasis (134) zwecks der Lasche (4-4') in die Längsrichtung rutscht, eine zusätzliche Regulierung zu der vertikalen und transversalen Regulierung bietend; die Stützbasis (134) hat an ihrem oberen Teil eine Platte (141) zur Montage von Zubehör oder für unmittelbar tragende Objekte, die ebenfalls über einen Verschlussriegel (142) verfügen.

22. Mehrzweckbock ist laut Anspruch 20 oder 21 **dadurch gekennzeichnet, dass** er mit einem Erstzubehör (143) ausgestattet ist bestehend aus einer Ebene (144) mit Regulatoren (105), jenes Erstzubehör (143) vergrößert die Stützfläche in zwei Dimensionen, Länge und Breite, die Regulatoren (105) haben einen Doppeleffekt oder eine Doppelerweiterung um sowohl flache als auch unregelmäßige Stücke zu halten wodurch im Falle des Gebrauchs eines einzelnen Bockes eine stabile Basis für Stücke die nicht sehr voluminös sind erreicht wird; der Zubehörsatz beinhaltet auf der Unterseite eine Gleitleiste (145) für den Aufbau durch Rutschen auf der Platte (141) der Stützbasis (134) und diese Gleitleiste (145) hat außerdem eine Querrille, welche in ihrer Fertigung mit dem Riegel (142) übereinstimmt, um einen Schnappverschluss zwischen dem Erstzubehör (143) und der Stützbasis (134) zu bewirken.

23. Mehrzweckbock ist laut Anspruch 22 **dadurch gekennzeichnet, dass** er mit einem Zweitzubehör (149) ausgestattet ist mit der zugehörigen unteren Gleitleiste (145), die eine Kerbe (146) hat zur Bindung an den Riegel (142) der Stützbasis (134); das Zweitzubehör (149) besteht aus zwei Elementen (147) die ein "V" bilden, mit einer Rolle (148) welche gesichert werden kann mittels der Hebel (a) (148'), um kreis-, oval-, polygonal-, und anders geformte Elemente zu stützen und zu tragen welche an eine Basis (147') montiert sind, die einige Kerben (149') an der Seite zur Montage von Stabilisierungsstäben hat.

24. Mehrzweckbock ist laut Anspruch 4 **dadurch gekennzeichnet, dass** die verlängerbaren Arme des Hauptquerträgers (36) drehbar sind, sowohl nach rechts als auch nach links, vorwärts und rückwärts zwecks der Lasche (4) des Hauptquerträgers (36) festgelegt durch einen Drehmechanismus zwischen den Enden der Lasche (4) und den externen Rohren (153) der verlängerbaren Arme, welcher mit einer halbumlaufende Scheibe (155') verbunden ist, die mit dem externen Rohr (153) verbunden ist, welches von dem letzteren zwecks einer Leiste (201) auf einer Schraube (154') herabhängt, diese Leiste (201) ist wiederum senkrecht mit einer zweiten halbumlaufende Scheibe (155) verbunden welche zwecks einer Lasche (4) auf einer Schraube (154) herabhängt die dazu vorgesehen ist das jede der halbumlaufende Scheiben (155-155') mit einer bogenförmigen Rille (156-156) ausgerüstet ist in welcher eine Schraube (157-157') läuft, die sich in eine Schraubenmutter (159"-159") mit abdichtenden Beilagscheiben(159-159') einfädelt; und mit einem Knopf zur manuellen Bedienung (158-158'), welcher das Blockieren der Position der ersten halbumlaufende Scheibe (155') zwecks der Leiste (201) erlaubt sowohl die Neigung des externen Rohres (153) nach vorne oder hinten zwecks der Leiste (201) und reguliert auch das Blockieren der Position der zweiten halbumlaufende Scheibe (155) zwecks der Lasche (4) und erlaubt so die Neigung der Leiste (201) nach rechts oder links, und reguliert auch die der ersten halbumlaufende Scheibe - (155') und daher die des externen Rohres (153).

25. Mehrzweckbock ist laut Anspruch 24 **dadurch gekennzeichnet, dass** mit dem Objekt zur Sicherstellung der vertikalen Position des externen Rohres (153) der Drehmechanismus mit einigen Sicherheitshebeln (160-160') vervollständigt wird, welche aus der Lasche (4) und jeweils von den Latten (201) herauskommen, die mit Federn ausgestattet sind, welche die Hebel (160-160') drücken und sie in einigen Rillen, welche jede halbumlaufende Scheibe (155-155') in ihrem gebogenen Teil hat fixieren, die vertikale Position des Rohrs (153) sichernd.

26. Mehrzweckbock ist laut Anspruch 2 **dadurch gekennzeichnet, dass** an dem oberen Teil des Hauptquerträgers (34-35-36) ein anpassbarer Hebezug montiert ist, dessen Kupplungsmittel auf einem ersten Paar von Rohren (616) basierend gebildet werden, die durch Löcher (150) laufen vorgesehen zu diesem Zweck in den dazugehörigen Laschen (4) und nahe an den Enden einer solchen Lasche (4); besagtes erstes Paar Rohre (161) wird durch dazugehörige Haltebuchsen (162) gehalten; der Aufbau des Hebezugs wird ausgeführt durch einige Eckstab-Halterungen (163) die in das erste Paar Rohre (161) eingerastet sind; der Aufbau des Hebezugs wird durch einen Hebel (163') gesichert, welcher mit einer Verbindungsplatte (165") verbunden ist und die letztere wiederum mit einem unteren horizontalen Rohr (165) durch das ein zweites Rohr (165') läuft; die Verlängerung von beiden ist fixiert durch einen Knopf (172'); es wurde vorgesehen, dass der besagte anpassbare Hebezug einen vertikalen Arm hat, der aus vertikalen Rohren (164, 164') ausfahrbar montiert besteht, der erste davon ist festgelegt durch ein äußeres vertikales Rohr (164) das mit dem zweite Rohr (165') verbunden ist und das andere ist festgelegt von dem inneren vertikalen Rohr (164') welches Höhenreguliert ist, wodurch innerhalb des inneren vertikalen Rohres (164') eine Feder (171) mit einem ersten Stück (173) und einem zweiten Stück (174) an seinen Enden montiert ist, das letztere ist mit dem unteren Teil des äußeren vertikalen Rohres (164) verbunden und das erste Stück (173), welches an einen Bügel (173') angrenzt, ist mit einem Stab (173") verbunden welcher wiederum mit einer Platte (173") auf der unteren Basis des äußeren vertikalen Rohres (164) verbunden ist, welches mit Knöpfen (172) vervollständigt ist, die das äußere vertikale Rohr (164) und das innere vertikale Rohr (164') in der gewünschten Verlängerung sichern, während das obere Ende des inneren vertikalen Rohres (164') an einem oberen horizontalen Arm gesichert ist, der von einem äußeren horizontalen Rohr (166) an das obere Ende des inneren vertikalen Rohres (164') gesichert ist, während ein inneres horizontales Rohr (167) durch Lager (170) innerhalb des äußeren horizontalen Rohres (166) beweglich ist um den Hebezug zwecks des Hauptquerträgers des Bockes regulieren zu können; die Enden des erwähnten horizontalen Armes, speziell das innere horizontale Rohr (167), hat Seilrollen (169) um ein Seil (170') durchlaufen zu lassen, um die Last mit einem Befestigungshaken der mit einem Gewicht (170") ausgestattet ist aufzuhängen, während an einem der Enden des inneren horizontalen Rohres (167) ein Antriebsmotor (168) ebenfalls eingebaut ist.

27. Mehrzweckbock ist laut Anspruch 3 oder 4 **dadurch gekennzeichnet, dass** an dem oberen Teil des Hauptquerträgers (34-35-36) ein anpassbarer Hebezug montiert ist, dessen Kopplungsmittel auf ein erstes Paar Rohre (161) basiert, welches durch Löcher (150) zu diesem Zwecke in den dazugehörigen Laschen (4-4') vorgesehen hindurchführt und nahe an den Enden dieser Laschen (4-4'); besagtes erstes Paar Rohre (161) wird durch dazugehörige Speicherbuchsen (162) gehalten; der Aufbau des Hebezugs wird durch einige Eckstab-Halterungen (163) ausgeführt, die in das erste Paar Rohre (161) eingreifen; der Aufbau des Hebezugs wird durch einen Hebel (163') gesichert und ist mit der Verbindungsplatte (165') verbunden und die letztere wiederum mit einem unteren horizontales Rohr (165) durch welches ein zweites Rohr (165') läuft; die Verlängerung von beiden ist durch einen Knopf (172') fixiert; es wurde vorgesehen, dass besagter anpassbarer Hebezug einen vertikalen Arm bestehend aus vertikalen Rohren (164, 164') hat, welche ausfahrbar montiert sind, der erste von ihnen festgelegt durch ein äußeres vertikales Rohr (164') verbunden mit dem zweiten Rohr (165') und der andere festgelegt durch ein inneres vertikales Rohr (164') welches höhenreguliert ist, wodurch innerhalb des inneren vertikalen Rohres (164') eine Feder (171) mit einem ersten Stück (173) und einem zweiten Stück (174) an den Enden montiert ist; das letzte ist verbunden mit dem unteren Teil des äußeren vertikalen Rohres (164) und das erste Stück (173) welches an einen Bügel (173') angrenzt ist verbunden mit dem Stab (173") welcher wiederum mit der Platte (173") der unteren Basis des äußeren vertikalen Rohres (164') verbunden ist, vervollständigt mit Knöpfen (172) welche das äußere vertikale Rohr (164) und das innere vertikale Rohr (164') in der gewünschten Verlängerung sichern, während das obere Ende des inneren vertikalen Rohres (164') an den oberen horizontalen Arm gesichert ist, welcher von einem äußeren horizontalen Rohr (166) gebildet wird, das an das obere Ende des inneren vertikalen Rohres (164') gesichert ist, während ein inneres horizontales Rohr (167) durch Lager (170) innerhalb des äußeren horizontalen Rohres (166) beweglich ist um in der Lage zu sein den Hebelzug zu regulieren zwecks des Hauptquerbalkens des Bockes; die Enden des besagten horizontalen Arms, speziell das innere horizontale Rohr (167), haben Seilrollen (169) um Seile (170') durchlaufen zu lassen um die Last mit einem Befestigungshaken der ausgestattet ist mit einem Gewicht (170") aufzuhängen, während an einem der Enden des inneren horizontalen Rohres (167) ein Antriebsmotor (168) ebenfalls angegliedert ist.

28. Mehrzweckbock ist laut Anspruch 1 **dadurch gekennzeichnet, dass** eine zwischengroße Buchse (175) an dem unteren Rohr (1) des ausfahrbaren Ständers montiert ist, an welchem ein unteres Rohr (1) ein unterer Bügel (176) und ein oberer Bügel (177) vorgesehen ist; besagte Buchse (175) ist an dem unteren Rohr (1) den unteren Bügel (176) umarmend positioniert, während der obere Bügel (177) an einen Zwischenbügel (178) angrenzt, an dem inneren Zwischenteil der Buchse (175) fixiert; zwischen besagtem Zwischenbügel - HOOP (178) und dem oberen Bügel (178') ist ein ausfahrbares Rohr (179) montiert wodurch besagtes ausfahrbares Rohr (179) durch eine Stellschraube (180) mit ihrem Knopf (180') der ihre Position sichert verschoben wird, während die Buchse (175) an das untere Rohr (1) durch Stellschrauben (181) mit ihren Knöpfen (181') fixiert und gehalten wird; diese Buchse (175) hat eine Öffnung (182) im Längssinn um den Durchlass zu erlauben einhergehend mit dem Gleiten über das untere Rohr (1) von anderen Knöpfen (125) mit deren Stellschrauben.

29. Mehrzweckbock ist laut Anspruch 1 **dadurch gekennzeichnet, dass** die Regulierungsmittel (105) einen Doppeleffekt oder eine Doppelverlängerung haben können und aus einem inneren Regulator (196) bestehen, endend an der Stützbasis (106) welche in die Buchse (197) gleitet; die Position des inneren Regulators (196) ist durch Schrauben (198) die durch einen Knopf (199) betrieben werden fixiert.

30. Mehrzweckbock ist laut Anspruch 1 **dadurch gekennzeichnet, dass** der ausfahrbare Ständer (100) durch eine motorbetriebene Schraube angehoben wird.

31. Mehrzweckbock ist laut Anspruch 1 **dadurch gekennzeichnet, dass** der ausfahrbare Ständer (100) durch ein pneumatisches System angehoben wird.

32. Mehrzweckbock ist laut Anspruch 1 **dadurch gekennzeichnet, dass** der ausfahrbare Ständer (100) durch ein hydraulisches System angehoben wird.

33. Mehrzweckbock ist laut Anspruch 1 **dadurch gekennzeichnet, dass** er eine Plattform für den Transport von einem oder mehreren Böcken bildet, besagte Plattform ist in der Lage durch manuelle oder automatische Mittel bewegt zu werden, da sie vor allem durch eine untere Basis (183) mit Verschiebungsrädern - (184) und Stabilisationsstützen mit Doppelwirkung oder Verlängerung (185) gebildet wird; das obere Ende dieser Stabilisatoren hat Ritzel (186) über die eine Kette in einer maschigen Form (187) führt was die simultane Regulierung aller Stabilisatoren oder Regulatoren (185) ermöglicht, es ist außerdem möglich die letzteren unabhängig zu regulieren; es wurde vorgesehen, dass ein Transportgriff (188) unter der Basis (183) hervortritt, während sich über einer solchen Basis (183) eine zweite Basis (189) befindet die mit der ersten durch Scharniere (193) an einer der vorderen Enden verbunden ist, während die gegenüberliegenden Regulatoren (191), Ritzeln (191") und Kette (191") haben die simultan einstellbar sind um die Vorderposition anzupassen; es wurde vorgesehen, dass an besagter zweiter Basis (189) eine dritte Basis (190) montiert ist und beide mit einem ihrer längslaufenden Enden durch Scharniere oder Achsen (194) verbunden sind und an der Kante gegenüber den Scharnieren mit Regulatoren (192) mit Ritzeln (192') und Kette (192") verbunden sind um die laterale Position der Basis (190) zu regulieren und anzupassen und das die letztere am oberen Teil einige Senkbleie hat.

## Revendications

1. Tréteau à usage multiple du type comprenant une colonne télescopique (100) de laquelle font partie au moins un tube inférieur (1) et un tube supérieur (2), qui se termine sur la partie inférieure en un trépied (3) pourvu de patte (3'), et lequel est terminé sur la partie supérieure en une éclisse (4) transversale qui fait partie d'une traverse de support (34-35-36) et qui est monté avec des moyens de support consistant à des régulateurs (105) qui peuvent agir directement comme des éléments de support ou qui peuvent faire cela avec l'interposition d'un adaptateur, **caractérisé en ce que** lesdits régulateurs (105) comprennent une chemise (197) et une vis verticale (196) à l'intérieur de la chemise (197) actionnée par un levier (11), qui termine sur la partie supérieure dans une base de support (106), et la colonne (100) incorpore également à un niveau inférieur, immédiatement par dessus le trépied (3) un embout (16) sous forme de disque pourvu d'une broche d'attache amovible (17), dans une disposition verticale, excentrique et parallèle à la colonne (100) ledit embout sous forme de disque (16) étant destiné à recevoir un ou plusieurs contrepoids (18) pour augmenter la stabilité du tréteau, spécialement lorsque la traverse (34-35-36) est à une hauteur considérable, lesdits contrepoids (18) ont une incision radiale (18) pour l'accouplement latéral à la colonne (100) et un orifice (20) pour l'accouplement de la broche d'attache (17) qui immobilise le contrepoids (18).

2. Tréteau à usage multiple selon la revendication 1, **caractérisé en ce que** la traverse (34) du tréteau est constituée par une éclisse (4) unie fermement à l'extrémité supérieure de la colonne (100), et terminée à ses extrémités par des régulateurs individuels (105) situés dans une disposition symétrique par rapport au tube (2) qui ont des bases de support (106) qui constituent la zone de soutien du tréteau.

3. Tréteau à usage multiple selon la revendication 1, **caractérisé en ce que** la traverse (35) est constituée par une éclisse (4) qui est terminée à ses extrémités par des éclisses transversales individuelles (4'), terminées à leur tour par quatre régulateurs (105). montés avec quatre bases de support (106) à des positions symétriques et séparés par rapport à la colonne (100) qui constitue la zone de soutien du tréteau.

4. Tréteau à usage multiple selon la revendication 1, **caractérisé en ce que** la traverse (36) est formée par une éclisse (4) qui a sur ses extrémités des bras extensibles qui comprennent un tube extérieur (153) et un tube intérieur (151), amovible au sein du tube extérieur (153), auquel il est fixé au moyen de poignés d'attache (152), les éclisses (4') correspondantes étant montées sur les tubs intérieurs (151), lesdites éclisses portant des régulateurs (105) à leurs extrémités.

5. Tréteau à usage multiple selon la revendication 1, **caractérisé en ce qu'**il incorpore un adaptateur (21) matérialisé en un liteau prismatique rectangulaire qui offre un support plat et continu, pourvu sur sa face inférieure de logements cylindriques (22) pour accoupler les bases de support (106) des régulateurs (105).

6. Tréteau à usage multiple selon la revendication 1, **caractérisé en ce qu'**il incorpore un adaptateur (23) consistant à une pièce dont la face supérieure (24) configure un dièdre obtus approprié pour constituer le support pour des objets cylindriques qui peuvent tendre à rouler latéralement, et il peut avoir sur sa base inférieure des logements cylindriques (22') pour accoupler les bases de support (106) des régulateurs (105).

7. Tréteau à usage multiple selon la revendication 1, **caractérisé en ce qu'**il incorpore un adaptateur (25) qui a une plate-forme plate aux extrémités de laquelle sont établies deux cloisons parallèles sur lesquelles est monté avec liberté de rotation l'arbre d'un rouleau (27) en tant qu'élément de support permettant le déplacement latéral de l'objet supporté par le tréteau, le dit rouleau (27) étant encadré par deux blocs prismatiques latéraux (28) dans lesquels des éléments de freinage sont établis et matérialisés en des vis de montage (29) ayant leurs poignés respectives (30) qui verrouillent le rouleau et préviennent qu'il tourne une fois que l'objet situé sur celui-ci a adopté la position correcte, des protubérances (31) étant établies sur la base de plate-forme de l'adaptateur (25) qui ont des logements (22 ") pour supporter les bases (106) des régulateurs (105).

8. Tréteau à usage multiple selon les revendications 6 et 7, **caractérisé en ce que** l'adaptateur (23-25) a des prolongements inférieurs, avec des rainures respectives (33) pour leur accouplement aux éclisses (4-4') des traverses (34-35).

9. Tréteau à usage multiple selon la revendication 1, **caractérisé en ce que** les pattes (3') du trépied (3) sont terminées par des bases individuelles (8), au moins une d'elles incorporant une vise de réglage (9) pour le nivellement et la verticalité correcte de la colonne (100).

10. Tréteau à usage multiple selon la revendication 8, **caractérisé en ce que** les bases (8) sont ajustées sur leurs faces inférieures avec un revêtement qui protège la surface de support du tréteau.

11. Tréteau à usage multiple selon la revendication 1, **caractérisé en ce que** les extrémités des pattes (3') incorporent des régulateurs (105) soudés aux pattes (3') pour la régulation en hauteur de celles-ci et obtenir une verticalité parfaite à des endroits inclinés en évitant le tremblement du tréteau lorsqu'il s'adapte à un sol irrégulier, une roue (107) étant fixée latéralement sur le boîtier qui lorsque le tréteau est incliné constitue le support sur le sol et rend possible le transport de l'ensemble de tréteau à la manière d'un chariot.

12. Tréteau à usage multiple selon la revendication 1 ou 11, **caractérisé en ce qu'**en correspondance avec la partie intérieure et inférieure des pattes (3), on a prévu l'incorporation d'un mécanisme de support à roulettes (108) qui a des moyens de transport (200) qui sert à transporter le tréteau en position vertical, qui peut s'ajuster en hauteur au moyen d'un ressort intérieur (109) qui peut être verrouillé dans la position inférieure des moyens de transport (200) au moyen d'un levier rotatif de verrouillage (110).

13. Tréteau à usage multiple selon la revendication 1, **caractérisé en ce que** la colonne télescopique (100) a un tube d'extension (13) qui s'ajuste sur le tube inférieur (1) de la colonne (100) et est fixée à celle-ci au moyen d'une paire de vis de montage (6') terminées par des poignés correspondantes (7), ledit tube (13) étant terminé à son extrémité supérieure par une chemise (14) montée avec un embout (15) qui reçoit le tube supérieur (2) de la colonne, la chemise (14) étant fixée aussi bien au tube d'extension (13) qu'au tube supérieur (2) au moyen des vis de montage respectives.

14. Tréteau à usage multiple selon la revendication 1, **caractérisé en ce que** le tube inférieur (1) de la colonne télescopique (100) est accouplé intérieurement à une longueur inférieure (102') qui se prolonge sous le trépied (3), ladite longueur inférieure (102') incorpore un ressort (115) qui est en appui contre la base (113') de la longueur inférieure (102) et amortit le déplacement en hauteur du tube inférieur (1), on a prévu l'incorporation d'un support complémentaire constitué d'un élément sous forme de disque (113) qui repose par-terre et qui a une vis (114) qui se visse à l'intérieur d'un écrou (115) fixé à la base (113') pour réguler la hauteur de la longueur inférieure (102').

15. Tréteau à usage multiple selon la revendication 1, **caractérisé en ce qu'**il incorpore un fil à plomb (111) pour niveler le tréteau, monté sur une base rotative (113) qui est accouplée sur la colonne (100) et qui peut tourner ou se déplacer en direction verticale pour trouver la position appropriée.

16. Tréteau à usage multiple selon la revendication 15, **caractérisé en ce que** la base rotative (112) est accouplée sur la colonne (100) à un niveau par-dessus l'embout sous forme de disque (16).

17. Tréteau à usage multiple selon la revendication 15 **caractérisé en ce que** la base rotative (112) est accouplé sur la colonne (100) sous le trépied (3).

18. Tréteau à usage multiple selon la revendication 1, **caractérisé en ce que** sur la colonne télescopique (100) sont montées des chemises à mémoires (116) qui ont des bords inférieurs (123) terminés par un isolateur amortisseur d'impact (124) et sur la surface extérieure de la chemise (116) des barres angulaires (116) unies à des éclisses (119') sont unies latéralement, sur lesdites barres angulaires (119) sont montés des barres stabilisantes (119) qui sont fixés au moyen de vis de montage (20) terminé par des poignées pour opération manuelle (121) évitant que la colonne télescopique (100) puisse se retirer en vertu de sa nature télescopique.

19. Tréteau à usage multiple selon la revendication 1, **caractérisé en ce qu'**il incorpore un dispositif de sécurité pour verrouillage automatique pour éviter la descente accidentelle des tubes qui forment la colonne télescopique (100) qui consiste à des poignés (125) équipés d'une vis qui pénètre intérieurement pour verrouiller le tube supérieur (2) de la colonne télescopique (100), et qui comprend une éclisse (126) traversée par ladite vis à laquelle elle est fixée au moyen d'écrous montés sur la même vis, en ayant un ressort (127) maintenu à une extrémité à l'éclisse (126) et à l'autre extrémité à une pièce (128) unie latéralement aux longueurs actuelles de la colonne télescopique (100)

20. Tréteau à usage multiple selon la revendication 2 **caractérisé en ce qu'**il incorpore une base de support (134), avec des moyens d'assemblage (125) sur la collerette supérieure de l'éclisse (4) à laquelle sont fixés des ressorts (132), ainsi qu'en ayant des évidements (136) qui sont montés sur les supports (106) des moyens de régulation (105) établis à cet effet aux extrémités de l'éclisse (4), ladite base de support (134) ayant un petit boîtier (137), ainsi qu'un gousset intérieur (138) un embout (139) à l'extrémité et un ressort de rappel (140), ce qui fait que la base de support (134) glisse dans la direction longitudinale par rapport à l'éclisse (4), en fournissant une régulation additionnelle à la régulation verticale et transversale, la base de support (134) ayant sur sa partie supérieure une plaque (141) pour le montage d'accessoires ou pour soutenir directement des objets, en ayant également un loquet de verrouillage (142).

21. Tréteau à usage multiple selon la revendication 3 ou 4, **caractérisé en ce qu'**il incorpore une base de support (134), avec des moyens d'assemblage (135) sur la collerette supérieure de l'éclisse (4-4') à laquelle sont fixés des ressorts (132), ainsi qu'en ayant des évidements (136) qui sont montés sur les supports (106) des moyens de régulation (105) établis à cet effet aux extrémités de l'éclisse (4-4'), ladite base de support (134) ayant un petit boîtier (137), ainsi qu'un gousset intérieur (138), un embout (139) à l'extrémité et un ressort de rappel (140), ce qui fait que la base de support (134) glisse dans la direction longitudinale par rapport à l'éclisse (4-4'), en fournissant une régulation additionnelle à la régulation verticale et transversale, la base de support (134) ayant sur sa partie supérieure une plaque (141) pour le montage d'accessoires ou pour soutenir directement des objets, en ayant également un loquet de verrouillage (142).

22. Tréteau à usage multiple selon la revendication 20 ou 21, **caractérisé en ce qu'**il incorpore un premier accessoire (143) constitué d'un plan (144) avec des régulateurs (105), ledit premier accessoire (143) augmente la surface de support en deux dimensions, longueur et largeur, les régulateurs (105) étant de double effet ou de double extension pour soutenir aussi bien des pièces plates qu'irrégulières, c qui fait que lorsque l'on utilise un seul tréteau on obtiendra une base stable pour des pièces qui ne sont encombrantes, l'accessoire incluant inférieurement un guide (145) pour l'assemblage en glissant sur la plaque (141) de la base de support (134), et ledit guide (145) a aussi une rainure transversale qui correspondra, lors de son assemblage au loquet (142), pour effectuer un accouplement à pression entre l'accessoire (143) et la base de support (134).

23. Tréteau à usage multiple selon la revendication 22, **caractérisé en ce qu'**il incorpore un second accessoire (149) avec le guide inférieur correspondant (145) qui a une entaille (46) pour s'engager sur le loquet (142) de la base de support (134), le second accessoire (149) étant constitué par deux éléments (147) configurés sous forme de « V ", avec le rouleau (148) qui peut être verrouillé au moyen du (148') pour supporter et soutenir des éléments de formes circulaire, ovale, polygonale et d'autres formes, qui sont montés sur une base (147') qui a des entailles (149') sur son côté pour le montage de barres stabilisantes.

24. Tréteau à usage multiple selon la revendication 4, **caractérisé en ce que** les bras extensibles de la traverse (36) peuvent être rotatifs, en s'inclinant les deux à droite et à gauche, en en avant et en arrière, par rapport à l'éclisse (4) de la traverse (36) au moyen d'un mécanisme rotatif défini entre les extrémités de l'éclisse (4) et les tubes extérieurs (153) des bras extensibles qui comprend une première plaque semi-circonférentielle (155') unie au tube extérieur (153), qui s'articule avec cette dernière par rapport à un liteau (201). Sur une vis (154'), Ledit liteau (201) est à son tour uni perpendiculairement à une deuxième plaque semi-circonférentielle (155) qui s'articule par rapport par l'éclisse (4) sur une vis, on a prévu que chacune des plaques semi-circonférentielle (155-155') est équipée d'une rainure cambrée (156-156') dans laquelle une vis (157-157') passe, laquelle se visse dans un écrou (159" - 159 ''') avec des rondelles de serrage (159-159') et avec une poignée pour une opération manuelle (158-158'), qui permet de verrouiller la position de la première plaque semi-circonférentielle (155') par rapport au listeau (201) qui régule l'inclinaison du tube externe (153) en avant ou en arrière par rapport au listeau (201), ainsi que permettre le verrouillage de la position de la deuxième plaque semi-circonférentielle (155) par rapport à l'éclisse (4) qui régule l'inclinaison à droite ou à gauche du listeau (201) et conjointement à la première plaque semi-circonférentielle (155') et par conséquent au tube extérieur (153).

25. Tréteau à usage multiple selon la revendication 24, **caractérisé en ce que**, afin d'assurer la position verticale du tube externe (153), le mécanisme rotatif est compléter par des leviers de verrouillage (160-160') qui émergent de l'éclisse (4) et du liteau (201) respectivement, qui sont pourvu de ressorts qui poussent les leviers (160-160') en les fixant dans des rainures que chaque plaque semi-circonférentielle (155-155') a dans sa partie courbée qui verrouillent la position verticale du tube (143).

26. Tréteau à usage multiple, selon la revendication 2, **caractérisé en ce que** sur la partie supérieure de la traverse (34-35-36) est monté un treuil adaptable dont les moyens d'accouplement sont constitués basés sur une première paire de tubes (161) qui passent à travers les orifices (150) prévus à cet effet dans l'éclisse correspondante (4), et près des extrémités de ladite éclisse (4), ladite première paire de tubes (161) étant maintenue au moyen de chemises de retenue correspondantes (162), l'assemblage du treuil étant réalisé au moyen d'agrafes de barres angulaires (163) engagées dans la première paire de tubes (161), l'assemblage du treuil étant verrouillé au moyen d'un levier (163') et qui sont unis à une plaque d'union (165 ") et cette dernière à son tour à un tube inférieur horizontal (165) à travers lequel passe un deuxième tube (165'), l'extension des deux étant fixée au moyen d'une poignée (172'), on a prévu que ledit treuil adaptable ait un bras vertical consistant à des tubes verticaux (164, 164') montés télescopiquement, les premier d'eux défini par un tube extérieur vertical (164) uni au deuxième tube (165') et l'autre défini par un tube vertical intérieur (164') qui est régulé en hauteur, par conséquent à l'intérieur du tube intérieur vertical (164') est monté un ressort (171) avec une première pièce (173) et une seconde pièce (174) à ses extrémités, ce dernier étant uni à la partie inférieure du tube extérieur vertical (164) et la première pièce (173) qui s'appuie contre un arceau (173') uni à une barre (173 ") qui à son tour est unie à une plaque (173 "') de la base inférieure du tube extérieur vertical (164), en se complétant avec des poignées (172) qui fixent le tube extérieur vertical (164) et le tube vertical intérieur (164') dans l'extension souhaitée tandis que l'extrémité supérieure du tube intérieur vertical (164') est fixée à un bras supérieur horizontal formé par un tube extérieur horizontal (166) fixé à l'extrémité supérieure du tube intérieur vertical (164'), tandis qu'un tube intérieur horizontal (167) peut se déplacer au moyen de coussinets (170) au sein du tube extérieur horizontal (166) pour pouvoir réguler le treuil par rapport à la traverse du tréteau, les extrémités dudit bras horizontal, spécifiquement le tube horizontal intérieur (167) ayant des poulies (169) pour faire passer un câble (170') pour suspendre la charge avec un crochet d'attache pourvu d'un poids (170'), tandis qu'à une des extrémités du tube horizontal intérieur (167) est aussi incorporé un moteur de commande (168).

27. Tréteau à usage multiple selon la revendication 3 ou 4, **caractérisé en ce que** la partie supérieure de la traverse (34-35-36) est montée un treuil adaptable, dont les moyens d'accouplement sont constitués basés sur une première paire de tubes (161) qui passent à travers les orifices (150) prévus à cet effet dans l'éclisse correspondante (4-4') et près des extrémités de ladite éclisse (4-4') ladite première paire de tubes (161) étant maintenue au moyen de chemises de retenue correspondantes (162), l'assemblage du treuil étant réalisé au moyen d'agrafes de barres angulaires (163) engagées dans la première paire de tubes (161), l'assemblage du treuil étant verrouillé au moyen d'un levier (163') et qui sont unis à une plaque d'union (165 ") et cette dernière à son tour à un tube inférieur horizontal (165) à travers lequel passe un deuxième tube (165'), l'extension des deux étant fixée au moyen d'une poignée (172'), on a prévu que ledit treuil adaptable ait un bras vertical consistant à des tubes verticaux (164, 164') montés télescopiquement, les premier d'eux défini par un tube extérieur vertical (164) uni au deuxième tube (165') et l'autre défini par un tube vertical intérieur (164') qui est régulé en hauteur, par conséquent à l'intérieur du tube intérieur vertical (164')est monté un ressort (171) avec une première pièce (173) et une seconde pièce (174) à ses extrémités, ce dernier étant uni à la partie inférieure du tube extérieur vertical (164) et la première pièce (173) qui s'appuie contre un arceau (173') uni à une barre (173 ") qui à son tour est unie à une plaque (173 "') de la base inférieure du tube extérieur vertical (164), en se complétant avec des poignées (172) qui fixent le tube extérieur vertical (164) et le tube vertical intérieur (164') dans l'extension souhaitée tandis que l'extrémité supérieure du tube intérieur vertical (164') est fixée à un bras supérieur horizontal formé par un tube extérieur horizontal (166) fixé à l'extrémité supérieure du tube intérieur vertical (164'), tandis qu'un tube intérieur horizontal (167) peut se déplacer au moyen de coussinets (170) au sein du tube extérieur horizontal (166) pour pouvoir réguler le treuil par rapport à la traverse du tréteau, les extrémités dudit bras horizontal, spécifiquement le tube horizontal intérieur (167) ayant des poulies (169) pour faire passer un câble (170') pour suspendre la charge avec un crochet d'attache pourvu d'un poids (170'), tandis qu'à une des extrémités du tube horizontal intérieur (167) est aussi incorporé un moteur de commande (168).

28. Tréteau à usage multiple selon la revendication 1, **caractérisé en ce qu'**une chemise de taille intermédiaire (175) est montée sur le tube inférieur (1) de la colonne télescopique, sur ledit le tube inférieur (1) sont prévus un arceau inférieur (176) et un arceau supérieur (177), ladite chemise (175) étant positionnée sur le tube inférieur (1) qui serre l'arceau inférieur (176), tandis que l'arceau supérieur (177) s'appuie contre un arceau intermédiaire (178) établi sur la partie intérieure intermédiaire de la chemise (175), entre ledit arceau intermédiaire (178) et l'arceau supérieur (178') est monté un tube extensible (179), par conséquent, ledit tube extensible (178') est traversé par une vis de montage (180) avec sa poignée (180') qui fixe sa position, tandis que la chemise (175) este fixée et retenue sur le tube inférieure (1) au moyen d'une vis de montage (181) avec sa poignée (181'), ladite chemise (175) ayant une ouverture (182) dans le sens longitudinal pour permettre le passage, dans le glissement de celle-ci sur le tube inférieur (1), des autres poignées (125) avec leur vis de montage.

29. Tréteau à usage multiple, selon la revendication 1, **caractérisé en ce que** les moyens de régulation (105) peuvent avoir un effet ou extension double et consistent à un régulateur intérieur (195), terminé sur la base de support (106), qui glisse au sein de la chemise (197), la position du régulateur intérieur (196) étant fixée au moyen d'une vis (198) actionnée par une poigné (199).

30. Tréteau à usage multiple, selon la revendication 1, **caractérisé en ce que** la colonne télescopique (100) est élevée au moyen d'une vis motorisée.

31. Tréteau à usage multiple selon la revendication 1, **caractérisé en ce que** la colonne télescopique (100) est élevée au moyen d'un système pneumatique.

32. Tréteau à usage multiple selon la revendication 1, **caractérisé en ce que** la colonne télescopique (100) est élevée au moyen d'un système hydraulique.

33. Tréteau à usage multiple selon la revendication 1, **caractérisé en ce qu'**il constitue une plate-forme pour le transport d'un ou plusieurs tréteau, ladite plate-forme étant capable d'être déplacée par des moyens manuels ou autonomes, étant constitué principalement au moyen d'une base de support (183) avec des roues de déplacement (184) et des supports stabilisateurs d'action ou extension double (185), l'extrémité supérieure de ces stabilisateurs ayant des pignons (186) sur lesquels passe une chaîne (187) en prise qui facilitent la régulation simultanée de tous les stabilisateurs ou régulateurs (185), n étant également possible de réguler ce dernier indépendamment, on a prévu qu'un manche de transport (188) émerge du dessous de la base (183), tandis que par-dessus ladite base (183) il y a une deuxième base (189) reliée à la première au moyen de charnières (193) à travers une des extrémités frontales, tandis que l'opposé a des régulateurs (191) avec des pignons (191') et une chaîne (191") ajustables simultanément pour niveler la position frontale, on a prévu que sur une deuxième base (189) est montée une troisième base (190) en étant les deux unies, sur une de leur extrémités longitudinales au moyen de charnières ou arbres (193), et sur le bord opposé l'articulation avec de régulateurs (192) avec des pignons (192') et une chaîne (192") pour réguler et niveler la position latérale de la base (190) et cette dernière ayant sur la partie supérieure des fils de plomb
